# EUROPEAN PATENT SPECIFICATION

(11) **EP 3 569 622 B1**
(45) Date of publication and mention of the grant of the patent: **06.01.2021**
(21) Application number: 18172155.6
(22) Date of filing: 14.05.2018
(51) Int. Cl.: C08F 2/48, C09J 133/06, C09J 133/08, C09J 7/38, C09J 7/10

(54) **MULTILAYER PRESSURE-SENSITIVE ADHESIVE ASSEMBLY**
MEHRSCHICHTIGE DRUCKEMPFINDLICHE HAFTMITTELANORDNUNG
FILM ADHÉSIF MULTICOUCHES SENSIBLE À LA PRESSION

(43) Date of publication of application: 20.11.2019
(73) Proprietor: 3M Innovative Properties Company, Saint Paul, MN 55133-3427 (US)
(72) Inventor: Torre, Claudia, 41453 Neuss (DE); Unverhau, Kerstin, 41453 Neuss (DE)
(74) Representative: Hettstedt, Stephan

(56) References cited:
- EP-A1- 0 913 443
- EP-A1- 2 803 712
- US-A1- 2015 307 751
- US-A1- 2016 083 629

## Description

### Technical Field

The present disclosure relates generally to the field of adhesives, more specifically to the field of pressure sensitive adhesive (PSA) compositions and multilayer assemblies. The present disclosure also relates to a method of adhering a first part to a second part, wherein the first part and the second part comprise a thermoplastic or a thermosetting organic polymer, and to uses of such multilayer assemblies.

### Background

Adhesives have been used for a variety of marking, holding, protecting, sealing and masking purposes. Adhesive tapes generally comprise a backing, or substrate, and an adhesive. One type of adhesive which is particularly preferred for many applications is represented by pressure sensitive adhesives. Pressure sensitive adhesives (PSAs) are well known to one of ordinary skill in the art to possess certain properties including the following: (1) aggressive and permanent tack, (2) adherence with no more than finger pressure, (3) sufficient ability to hold onto an adhered, and (4) sufficient cohesive strength.

Materials that have been found to function well as pressure sensitive adhesives are polymers designed and formulated to exhibit the requisite viscoelastic properties resulting in a desired balance of tack, peel adhesion, and shear strength. The most commonly used polymers for preparation of pressure sensitive adhesives are various (meth)acrylate based copolymers, natural rubber, synthetic rubbers, and silicones.

With broadened use of pressure-sensitive adhesive tapes over the years, performance requirements have become more and more demanding. Shear holding capability, for example, which originally was intended for applications supporting modest loads at room temperature, has now increased substantially for many applications in terms of operating temperature and load. Indeed, many specific applications require pressure sensitive adhesives to support a load in high stress conditions such as e.g. exposure to intense weathering conditions or under intensive usage during which the pressure-sensitive adhesive tapes are subjected to high mechanical and/or chemical stress.

When used for outdoor or exterior applications, pressure sensitive adhesive tapes have to provide operability at various challenging conditions such as exposure to a wide temperature range, and in particular provide acceptable performance at extreme temperatures, such as e.g. high temperature up to 90°C or low temperatures down to -40°C. Other challenging conditions in the context of the present disclosure include exposure to intense wind or rain, which may typically occur in transportation and construction market applications.

In modern transportation and construction market applications, the need to reduce the weight of component parts has led to increasing usage of composite and thermoplastic materials, which are known to be challenging substrates for adhesive bonding. In the automotive and aerospace manufacturing industry, a myriad of exterior parts is indeed made of the so-called LSE and MSE materials, i.e. substrates having respectively a low and a medium surface energy.

The pressure sensitive adhesive materials known from the prior art do not often provide sufficient tack to various types of substrate, including the so-called LSE, MSE and HSE substrates, i.e. substrates having respectively a low surface energy, a medium surface energy and a high surface energy. In particular, the peel force or shear resistance on these challenging-to-bond substrates, particularly the LSE and MSE substrates, do not often fulfill the requirements, especially under environmental stress like altering temperatures and humidity.

This deficiency may partly be overcome by the addition of higher amounts of tackifiers. However, the excessive use of tackifiers may often detrimentally affect critical characteristics of pressure sensitive adhesives such as e.g. shear resistance and cohesive strength, and may raise the glass transition temperature of the corresponding adhesive. Furthermore, tackifiers may migrate into the substrate to which the adhesive tape is bonded and may lead to an undesired color change or stability reduction.

For example, EP 0913443 A1 discloses a heat-sensitive adhesive sheet comprising a substrate having formed thereon an adhesive layer comprising a polymer composition (C) which comprises an aqueous emulsion (A) and a copolymer (B), wherein an adhesive force determined by the 180° peeling test method as specified in JIS Z 0237 at a temperature of 25°C is 10 g/25 mm or less: Aqueous emulsion (A): An aqueous emulsion containing an alkyl (meth)acrylate-based polymer (a) having a glass transition temperature of -10°C or below, which is obtained by emulsion-polymerizing radically polymerizable monomers containing as the main component an alkyl (meth)acrylate; and Copolymer (B): A water-soluble or water-dispersible copolymer (B) having a glass transition temperature of 20°C or above, which is a copolymer obtained by copolymerizing an alpha,beta-ethylenically unsaturated carboxylic acid with other radically polymerizable monomers, wherein a part or the entire amount of carboxyl groups in the copolymer is neutralized with a base having a boiling point of 110°C or below. Similarly, US 2016/083629 A1 describes a crosslinked adhesive composition comprising a low Tg (meth)acrylate copolymer component, a high Tg (meth)acrylate copolymer component, and a hydrogenated hydrocarbon tackifier. This disclosure provides a pressure-sensitive adhesive and pressure-sensitive adhesive articles that are particularly useful in the bonding of low surface energy (LSE) substrates. Furthermore, US 2015/307751 A1 discloses a multilayer pressure sensitive adhesive (PSA) assembly, comprising at least one pressure sensitive adhesive layer and a polymeric foam layer, wherein the pressure sensitive adhesive layer comprises a pressure-sensitive adhesive composition comprising a reaction product of a polymerizable material comprising: a) 2-propylheptyl acrylate as a first monomer; and optionally b) a second monomer having an ethylenically unsaturated group.

It is therefore a recognized and continuous challenge in the adhesive tapes industry to develop pressure sensitive adhesive tapes capable of providing excellent adhesion and outstanding cohesion properties to difficult-to-bond substrates, even under high stress conditions such as e.g. exposure to intense weathering conditions or under intensive usage.

Without contesting the technical advantages associated with the pressure sensitive adhesive compositions known in the art, there is still a need for a stable and cost-effective pressure sensitive adhesive tape having improved and versatile adhesion characteristics, in particular with respect to peel forces and shear resistance on various types of difficult to adhere surfaces, such as in particular LSE and MSE substrates, even under high stress conditions such as e.g. exposure to intense weathering conditions or under intensive usage.

Other advantages of the pressure sensitive adhesive (PSA) tapes and methods of the disclosure will be apparent from the following description.

### Summary

According to one aspect, the present disclosure relates to a multilayer pressure sensitive adhesive assembly comprising a first pressure sensitive adhesive polymeric layer having a first pressure sensitive adhesive composition adjacent to a second pressure sensitive adhesive polymeric foam layer having a second pressure sensitive adhesive composition, wherein:
(A) the first pressure sensitive adhesive composition comprises:
   a) 60 parts by weight or greater of a low Tg (meth)acrylate copolymer having a Tg of below 20°C comprising:
      i. C₁-C₃₂ (meth)acrylic acid ester monomer units;
      ii. from 0.1 to 15 parts by weight of C₂-C₈ hydroxyalkyl (meth)acrylic acid ester monomer units, based on 100 parts by weight of the total monomers of the low Tg (meth)acrylate copolymer having a Tg of below 20°C;
      iii. optionally, acid functional ethylenically unsaturated monomer units;
      iv. optionally, further non-acid functional, ethylenically unsaturated polar monomer units;
      v. optionally, vinyl monomer units; and
      vi. optionally, multifunctional (meth)acrylate monomer units, and
   b) up to 40 parts by weight of a high Tg (meth)acrylate copolymer having a weight average molecular weight (Mw) of above 20,000 Daltons and having a Tg of above 50°C, and comprising:
      i. high Tg (meth)acrylic acid ester monomer units having a Tg of above 50°C;
      ii. optionally, acid functional ethylenically unsaturated monomer units;
      iii. optionally, low Tg (meth)acrylic acid ester monomer units having a Tg of below 20°C;
      iv. optionally, non-acid functional, ethylenically unsaturated polar monomer units;
      v. optionally, vinyl monomer units;
      vi. optionally, a chlorinated polyolefinic (co)polymer; and
   c) optionally, up to 20 parts by weight of a hydrogenated hydrocarbon tackifier, based on 100 parts by weight of copolymers a) and b); and (B) the second pressure sensitive adhesive composition comprises:
      a) a first (meth)acrylate copolymer comprising from 0.1 to 12 wt% of (meth)acrylic acid monomer units, based on the weight of the first (meth)acrylate copolymer;
      b) a second (meth)acrylate copolymer comprising from 15 to 40 wt% of (meth)acrylic acid monomer units, based on the weight of the second (meth)acrylate copolymer; and
      c) optionally, a hollow non-porous particulate filler material.

According to another aspect, the present disclosure is directed to a method of adhering a first part to a second part, wherein the first part and the second part comprise a thermoplastic or a thermosetting organic polymer, and wherein the method comprises the steps of:
a) providing a multilayer pressure sensitive adhesive assembly as described above, and comprising:
   i. a second pressure sensitive adhesive polymeric foam layer comprising two major surfaces;
   ii. a first pressure sensitive adhesive polymeric layer adjacent to one major surface of the polymeric foam layer;
   iii. optionally, a third pressure sensitive adhesive layer adjacent to the second pressure sensitive adhesive polymeric foam layer on the major surface which is opposed to the major surface or the second pressure sensitive adhesive polymeric foam layer adjacent to the first pressure sensitive adhesive polymeric layer, and wherein the first pressure sensitive adhesive polymeric layer, the the second pressure sensitive adhesive polymeric foam layer and the optional third pressure sensitive adhesive layer are superimposed;
b) adhering the first pressure sensitive adhesive polymeric layer to the first part; and
c) adhering the second part to the second pressure sensitive adhesive polymeric foam layer or the optional third pressure sensitive adhesive layer.

According to still another aspect, the present disclosure relates to the use of a multilayer pressure sensitive adhesive assembly as described above for adhering a first part to a second part, wherein the first part and the second part comprise a thermoplastic or a thermosetting organic polymer.

### Detailed description

According to a first aspect, the present disclosure relates to a multilayer pressure sensitive adhesive assembly comprising a first pressure sensitive adhesive polymeric layer having a first pressure sensitive adhesive composition adjacent to a second pressure sensitive adhesive polymeric foam layer having a second pressure sensitive adhesive composition, wherein:
(A) the first pressure sensitive adhesive composition comprises:
   a) 60 parts by weight or greater of a low Tg (meth)acrylate copolymer having a Tg of below 20°C comprising:
      i. C₁-C₃₂ (meth)acrylic acid ester monomer units;
      ii. from 0.1 to 15 parts by weight of C₂-C₈ hydroxyalkyl (meth)acrylic acid ester monomer units, based on 100 parts by weight of the total monomers of the low Tg (meth)acrylate copolymer having a Tg of below 20°C;
      iii. optionally, acid functional ethylenically unsaturated monomer units;
      iv. optionally, further non-acid functional, ethylenically unsaturated polar monomer units;
      v. optionally, vinyl monomer units; and
      vi. optionally, multifunctional (meth)acrylate monomer units, and
   b) up to 40 parts by weight of a high Tg (meth)acrylate copolymer having a weight average molecular weight (Mw) of above 20,000 Daltons and having a Tg of above 50°C, and comprising:
      i. high Tg (meth)acrylic acid ester monomer units having a Tg of above 50°C;
      ii. optionally, acid functional ethylenically unsaturated monomer units;
      iii. optionally, low Tg (meth)acrylic acid ester monomer units having a Tg of above 50°C;
      iv. optionally, non-acid functional, ethylenically unsaturated polar monomer units;
      v. optionally, vinyl monomer units;
      vi. optionally, a chlorinated polyolefinic (co)polymer; and
   c) optionally, up to 20 parts by weight of a hydrogenated hydrocarbon tackifier, based on 100 parts by weight of copolymers a) and b); and (B) the second pressure sensitive adhesive composition comprises:
      a) a first (meth)acrylate copolymer comprising from 0.1 to 12 wt% of (meth)acrylic acid monomer units, based on the weight of the first (meth)acrylate copolymer;
      b) a second (meth)acrylate copolymer comprising from 15 to 40 wt% of (meth)acrylic acid monomer units, based on the weight of the second (meth)acrylate copolymer; and
      c) optionally, a hollow non-porous particulate filler material.

In the context of the present disclosure, it has surprisingly been found that a multilayer pressure sensitive adhesive assembly as described above, in particular wherein the first pressure sensitive adhesive composition and the second pressure sensitive adhesive composition are specifically as defined above, provides excellent adhesion and outstanding cohesion properties to various difficult-to-bond substrates, even under high stress conditions such as e.g. exposure to intense weathering conditions or under intensive usage. Challenging or difficult-to-bond substrates include, in particular, substrates having respectively a low (LSE) and a medium surface energy (MSE). This is particularly surprising finding as these various substrates typically exhibit completely different surface chemistry and energy. Such advantageous properties are particularly outstanding on difficult-to-bond substrates such as automotive clear coats, automotive critical paint systems or automotive finishing systems. The second pressure sensitive adhesive polymeric foam layer having a second pressure sensitive adhesive composition also provides excellent mechanical properties (in particular high stress relaxation, high internal strength and good conformability) besides the outstanding adhesion performance on various types of substrates, including the challenging-to-bond LSE and MSE substrates.

Without wishing to be bound by theory, it is believed that this very unique combination of advantageous properties is due in particular to the specific amount of from 0.1 to 15 parts by weight of C₂-C₈ hydroxyalkyl (meth)acrylic acid ester monomer units, which is present in the low Tg (meth)acrylate copolymer comprised in the first pressure sensitive adhesive composition. These C₂-C₈ hydroxyalkyl (meth)acrylic acid ester monomer units are believed to provide advantageous polarity characteristics to the first pressure sensitive adhesive polymeric layer of the multilayer pressure sensitive adhesive assembly.

Without wishing to be bound by theory still, it is believed that this excellent balance of advantageous properties is further due to the specific combination of a first (meth)acrylate copolymer and a second (meth)acrylate copolymer as described above within the same second pressure sensitive adhesive composition. The first (meth)acrylate copolymer comprising from 0.1 to 12 wt% of (meth)acrylic acid monomer units is believed to provide excellent adhesion performance on various types of substrates, due in particular to the excellent wetting properties provided by the relatively low concentration of (meth)acrylic acid monomer units present in the first (meth)acrylate copolymer and which provides excellent softness to the resulting pressure sensitive adhesive composition. As for the second (meth)acrylate copolymer comprising from 15 to 40 wt% of (meth)acrylic acid monomer units, the latter is believed to provide outstanding mechanical properties, due in particular to the relatively high concentration of (meth)acrylic acid monomer units present in the first (meth)acrylate copolymer. In other words, the second pressure sensitive adhesive composition surprisingly combines the inherently contradicting properties provided by a relatively low concentration of (meth)acrylic acid monomer units and relatively high concentration of (meth)acrylic acid monomer units within the same (meth)acrylic-based pressure sensitive adhesive composition. Still without wishing to be bound by theory, it is believed that these two set of contradicting properties are both delivered thanks to the coexistence of the first and second (meth)acrylate copolymer as a multi-phase system into the same second pressure sensitive adhesive composition, and which provides advantageous properties when compared to compositions having a homogenous structure.

It has been further surprisingly found that the second pressure sensitive adhesive composition of the multilayer pressure sensitive adhesive according to the disclosure, albeit comprising a relatively high overall (meth)acrylic acid concentration, does not lead to (or substantially reduce) the potentially issue of (meth)acrylic acid monomers diffusion to the adjacent layer(s), in particular to the first pressure sensitive adhesive layer. This unwanted diffusion phenomenon may in particular occur in those multilayer assemblies comprising a layer having a relatively high concentration of (meth)acrylic acid monomer units adjacent to a layer having a relatively low concentration of acrylic acid monomer units, and - due to a concentration gradient of (meth)acrylic acid monomer units in the multilayer assembly - translates into a (meth)acrylic acid monomers diffusion from the high (meth)acrylic acid concentrated layer into the low (meth)acrylic acid concentrated layer. Without wishing to be bound by theory, it is believed that this unique property is due to the coexistence of the first and second (meth)acrylate copolymer as a multi-phase system into the same second pressure sensitive adhesive composition, which prevents or at least substantially reduces the diffusion of free (meth)acrylic monomer units between layers.

In the context of the present disclosure, the expression "low surface energy substrates" is meant to refer to those substrates having a surface energy of less than 34 dynes per centimeter. Included among such materials are polypropylene, polyethylene (e.g., high density polyethylene or HDPE), and blends of polypropylene (e.g. PP/EPDM, TPO).

In the context of the present disclosure, the expression "medium surface energy substrates" is meant to refer to those substrates having a surface energy comprised between 34 and 70 dynes per centimeter, typically between 34 and 60 dynes per centimeter, and more typically between 34 and 50 dynes per centimeter. Included among such materials are polyamide 6 (PA6), acrylonitrile butadiene styrene (ABS), PC/ABS blends, PC, PVC, PA, PUR, TPE, POM, polystyrene, poly(methyl methacrylate) (PMMA), clear coat surfaces, in particular clear coats for vehicles like a car or coated surfaces for industrial applications and composite materials like fiber reinforced plastics.

The surface energy is typically determined from contact angle measurements as described, for example, in ASTM D7490-08.

The term superimposed, as used throughout the description, means that two or more layers of the liquid precursors of the polymers or of the polymer layers of the multilayer pressure sensitive adhesive assembly, are arranged on top of each other. Superimposed liquid precursor layers or polymer layers may be arranged directly next to each other so that the upper surface of the lower layer is abutting the lower surface of the upper layer.

The term adjacent, as used throughout the description, refers to two superimposed layers within the precursor multilayer pressure sensitive adhesive assembly or the cured multilayer pressure sensitive adhesive assembly which are arranged directly next to each other, i.e. which are abutting each other.

The terms "glass transition temperature" and "Tg" are used interchangeably and refer to the glass transition temperature of a (co)polymeric material or a mixture. Unless otherwise indicated, glass transition temperature values are estimated by the Fox equation, as detailed hereinafter.

In the context of the present disclosure, the expression "high Tg (meth)acrylate copolymer" is meant to designate a (meth)acrylate copolymer having a Tg of above 50°C.

In the context of the present disclosure, the expression "high Tg (meth)acrylic acid ester monomer units" is meant to designate (meth)acrylic acid ester monomer units having a Tg of above 50°C, as a function of the homopolymer of said high Tg monomers.

In the context of the present disclosure, the expression "low Tg (meth)acrylate copolymer" is meant to designate a (meth)acrylate copolymer having a Tg of below 20°C.

In the context of the present disclosure, the expression "low Tg (meth)acrylic acid ester monomer units" is meant to designate (meth)acrylic acid ester monomer units having a Tg of below 20°C, as a function of the homopolymer of said low Tg monomers.

Exemplary "wet-in-wet" production processes for use herein are described in detail in e.g. WO-A1-2011094385 (Hitschmann et al.) or in EP-A1-0259094 (Zimmerman et al.).

The term "alkyl" refers to a monovalent group which is a saturated hydrocarbon. The alkyl can be linear, branched, cyclic, or combinations thereof and typically has 1 to 32 carbon atoms. In some embodiments, the alkyl group contains 1 to 25, 1 to 20, 1 to 18, 1 to 12, 1 to 10, 1 to 8, 1 to 6, or 1 to 4 carbon atoms. Examples of alkyl groups include, but are not limited to, methyl, ethyl, n-propyl, isopropyl, n-butyl, isobutyl, tert-butyl, n-pentyl, n-hexyl, cyclohexyl, n-heptyl, n-octyl, 2-ethylhexyl, 2-octyl and 2-propylheptyl.

According to the present disclosure, the first pressure sensitive adhesive composition for use herein comprises a low Tg (meth)acrylate copolymer comprising:
i. C₁-C₃₂ (meth)acrylic acid ester monomer units;
ii. from 0.1 to 15 parts by weight of C₂-C₈ hydroxyalkyl (meth)acrylic acid ester monomer units, based on 100 parts by weight of the total monomers of the low Tg (meth)acrylate copolymer;
iii. optionally, acid functional ethylenically unsaturated monomer units;
iv. optionally, further non-acid functional, ethylenically unsaturated polar monomer units;
v. optionally, vinyl monomer units; and
vi. optionally, multifunctional (meth)acrylate monomer units.

According to a particular aspect, the low Tg (meth)acrylate copolymer for use herein comprises from 0.1 to 15 parts by weight, from 0.2 to 15 parts by weight, from 0.2 to 12 parts by weight, from 0.5 to 12 parts by weight, from 0.8 to 12 parts by weight, from 1.0 to 12 parts by weight, from 1.5 to 12 parts by weight, from 1.8 to 12 parts by weight, from 2.0 to 12 parts by weight, from 2.2 to 12 parts by weight, from 2.5 to 12 parts by weight, from 2.5 to 11 parts by weight, from 2.5 to 10 parts by weight, from 2.5 to 10 parts by weight, or even from 2.5 to 8 parts by weight of C₂-C₈ hydroxyalkyl (meth)acrylic acid ester monomer units, based on 100 parts by weight of the total monomers of the low Tg (meth)acrylate copolymer.

According to another particular aspect of the multilayer pressure sensitive adhesive according to the disclosure, the low Tg (meth)acrylate copolymer for use herein comprises C₂-C₆ hydroxyalkyl (meth)acrylic acid ester monomer units, C₂-C₇ hydroxyalkyl (meth)acrylic acid ester monomer units, C₂-C₆ hydroxyalkyl (meth)acrylic acid ester monomer units, C₂-C₅ hydroxyalkyl (meth)acrylic acid ester monomer units, or even C₂-C₄ hydroxyalkyl (meth)acrylic acid ester monomer units.

In an exemplary aspect, the C₂-C₈ hydroxyalkyl (meth)acrylic acid ester monomer units for use in the low Tg (meth)acrylate copolymer are selected from the group consisting of hydroxy ethyl (meth)acrylates, hydroxy propyl (meth)acrylates, hydroxy butyl (meth)acrylates, hydroxy pentyl (meth)acrylates, hydroxy hexyl (meth)acrylates, hydroxy heptyl (meth)acrylates, hydroxy octyl (meth)acrylates, and any mixtures thereof.

In an advantageous aspect, the C₂-C₈ hydroxyalkyl (meth)acrylic acid ester monomer units for use in the low Tg (meth)acrylate copolymer are selected from the group consisting of hydroxy ethyl (meth)acrylates, hydroxy propyl (meth)acrylates, hydroxy butyl (meth)acrylates, and any mixtures thereof.

According to a preferred aspect, the C₂-C₈ hydroxyalkyl (meth)acrylic acid ester monomer units for use in the low Tg (meth)acrylate copolymer are selected from the group consisting of 2-hydroxy ethyl (meth)acrylates, 3-hydroxy propyl (meth)acrylates, 4-hydroxy butyl (meth)acrylates, and any mixtures thereof.

According to a particular aspect, the low Tg (meth)acrylate copolymer for use herein comprises C₁-C₂₄ (meth)acrylic acid ester monomer units, C₁-C₁₈ (meth)acrylic acid ester monomer units, or even C₄-C₁₂ (meth)acrylic acid ester monomer units.

According to a more particular aspect, the low Tg (meth)acrylate copolymer for use herein comprises monomeric (meth)acrylic acid esters of a non-tertiary alcohol, which alcohol contains from 1 to 32, from 1 to 24, from 1 to 18, or even from 4 to 12 carbon atoms. A mixture of such monomers may be used.

In a typical aspect, the low Tg (meth)acrylate copolymer for use herein, and which may be a solution copolymer or a syrup copolymer, has a Tg of below 20°C, or even below 0°C.

In another particular aspect, the low Tg (meth)acrylate copolymer for use herein comprises a solution copolymer comprising a low Tg solute copolymer in a solvent.

Examples of C₁-C₃₂ (meth)acrylic acid ester monomer units suitable for use in the low Tg (meth)acrylate copolymer include, but are not limited to, the esters of either acrylic acid or methacrylic acid with non-tertiary alcohols selected from the group consisting of ethanol, 1-propanol, 2-propanol, 1-butanol, 2-butanol, 1-pentanol, 2-pentanol, 3-pentanol, 2-methyl-1-butanol, 3-methyl-1-butanol, 1-hexanol, 2-hexanol, 2-methyl-1-pentanol, 3-methyl-1-pentanol, 2-ethyl-1-butanol, 3,5,5-trimethyl-1-hexanol, 3-heptanol, 1-octanol, 2-octanol, isooctylalcohol, 2-ethyl-1-hexanol, 1-decanol, 2-propylheptanol, 1-dodecanol, 1-tridecanol, 1-tetradecanol, citronellol, dihydrocitronellol, and any combinations of mixtures thereof.

Preferably, the C₁-C₃₂ (meth)acrylic acid ester monomer units suitable for use in the low Tg (meth)acrylate copolymer are selected from the group consisting of (meth)acrylic esters of 2-octanol, citronellol, dihydrocitronellol, and any combinations or mixtures thereof.

In some other aspects, the C₁-C₃₂ (meth)acrylic acid ester monomer units are esters of (meth)acrylic acid with 2-alkyl alkanols (Guerbet alcohols) as described in WO-A1-2011119363 (Lewandowski et al.), the content of which is incorporated herein by reference.

In some other aspects of the multilayer pressure sensitive adhesive assembly according to the disclosure, the C₁-C₃₂ (meth)acrylic acid ester monomer units, the C₁-C₂₄ (meth)acrylic acid ester monomer units, or even the C₁-C₁₈ (meth)acrylic acid ester monomer units of the low Tg (meth)acrylate copolymer comprise esters of (meth)acrylic acid with non-tertiary alcohols selected from the group consisting of 2-ethyl-1-hexanol, 2-propylheptanol, isooctylalcohol, and 2-octanol.

According to a beneficial aspect, the C₁-C₃₂ (meth)acrylic acid ester monomer units, the C₁-C₂₄ (meth)acrylic acid ester monomer units, or even the C₁-C₁₈ (meth)acrylic acid ester monomer units of the low Tg (meth)acrylate copolymer comprise esters of (meth)acrylic acid with non-tertiary alcohols selected from the group consisting of 2-ethyl-1-hexanol and 2-propylheptanol.

In some aspects, the C₁-C₃₂ (meth)acrylate acid ester monomer units for use herein is present in an amount of from 60 to 99.5 parts by weight, from 65 to 99.5 parts by weight, from 65 to 99.5 parts by weight, from 70 to 99.5 parts by weight, from 75 to 99.5 parts by weight, from 80 to 99.5 parts by weight, from 85 to 99.5 parts by weight, or even from 85 to 98.5 parts by weight, based on 100 parts total monomer content used to prepare the low Tg copolymer.

The low Tg (meth)acrylate copolymer for use herein may optionally further comprise acid functional ethylenically unsaturated monomer units, where the acid functional group may be an acid *per se,* such as a carboxylic acid, or a portion may be salt thereof, such as an alkali metal carboxylate. Useful acid functional ethylenically unsaturated monomer units include, but are not limited to, those selected from ethylenically unsaturated carboxylic acids, ethylenically unsaturated sulfonic acids, ethylenically unsaturated phosphonic acids, and mixtures thereof. Examples of such compounds include those selected from acrylic acid, methacrylic acid, itaconic acid, fumaric acid, crotonic acid, citraconic acid, maleic acid, oleic acid, β-carboxyethyl (meth)acrylate, 2-sulfoethyl methacrylate, styrene sulfonic acid, 2-acrylamido-2-methylpropanesulfonic acid, vinylphosphonic acid, and any combinations or mixtures thereof.

Due to their availability, acid functional ethylenically unsaturated monomer units of the low Tg (meth)acrylate copolymer are generally selected from ethylenically unsaturated carboxylic acids, i.e. (meth)acrylic acids. When even stronger acids are desired, acidic monomers include the ethylenically unsaturated sulfonic acids and ethylenically unsaturated phosphonic acids. The acid functional ethylenically unsaturated monomer unit is generally used in amounts of 0.5 to 15 parts by weight, 1 to 15 parts by weight, or even 1 to 5 parts by weight, based on 100 parts by weight total monomer of the low Tg (meth)acrylate copolymer. In some other aspects, the acid functional ethylenically unsaturated monomer unit is used in amounts of 0.5 to 15 parts by weight, 0.5 to 10 parts by weight, 0.5 to 5 parts by weight, 0.5 to 3 parts by weight, or even 0.5 to 2 parts by weight, based on 100 parts by weight total monomer of the low Tg (meth)acrylate copolymer.

The low Tg (meth)acrylate copolymer for use herein may optionally further comprise further non-acid functional, ethylenically unsaturated monomer units, in particular non-acid functional, ethylenically unsaturated polar monomer units.

The non-acid functional, ethylenically unsaturated polar monomer units useful in preparing the low Tg (meth)acrylate copolymer are both somewhat oil soluble and water soluble, resulting in a distribution of the polar monomer between the aqueous and oil phases in an emulsion polymerization. As used herein, the term "polar monomers" are exclusive of acid functional monomers.

Representative examples of suitable non-acid functional, ethylenically unsaturated polar monomer units include, but are not limited to, 2-hydroxyethyl (meth)acrylate; N-vinylpyrrolidone; N-vinylcaprolactam; acrylamides; mono- or di-N-alkyl substituted acrylamide; t-butyl acrylamide; dimethylaminoethyl acrylamide; N-octyl acrylamide; poly(alkoxyalkyl) (meth)acrylates including 2-(2-ethoxyethoxy)ethyl (meth)acrylate, 2-ethoxyethyl (meth)acrylate, 2-methoxyethoxyethyl (meth)acrylate, 2-methoxyethyl methacrylate, polyethylene glycol mono(meth)acrylates; alkyl vinyl ethers, including vinyl methyl ether; and mixtures thereof. Preferred non-acid functional, ethylenically unsaturated polar monomer units include those selected from the group consisting of 2-hydroxyethyl (meth)acrylate and N-vinylpyrrolidinone. The non-acid functional, ethylenically unsaturated polar monomer unit may be present in amounts of from 0 to 20 parts by weight, based on 100 parts by weight total monomer of the low Tg (meth)acrylate copolymer.

In a particular aspect, the further non-acid functional, ethylenically unsaturated polar monomer units for use herein are selected from the group consisting of 2-hydroxyethyl (meth)acrylate, N-vinylpyrrolidone, N-vinylcaprolactam, acrylamides, poly(alkoxyalkyl) (meth)acrylates, alkyl vinyl ethers, and any mixtures thereof.

The low Tg (meth)acrylate copolymer for use herein may optionally further comprise vinyl monomer units. Vinyl monomer units useful in preparing the low Tg (meth)acrylate copolymer, include vinyl esters (e.g., vinyl acetate and vinyl propionate), styrene, substituted styrene (e.g., α-methyl styrene), vinyl halide, and mixtures thereof. As used herein vinyl monomer units are exclusive of acid functional monomers, acrylate ester monomers and polar monomers. Such vinyl monomer units are generally used at 0 to 5 parts by weight, or even 1 to 5 parts by weight, based on 100 parts by weight total monomer of the low Tg (meth)acrylate copolymer.

In a beneficial aspect, the vinyl monomer units for use herein are selected from the group consisting of vinyl esters, styrene, substituted styrene, vinyl halide, and any mixtures thereof.

In order to increase cohesive strength of the coated first pressure sensitive adhesive polymeric layer, the low Tg (meth)acrylate copolymer for use herein may optionally further comprise multifunctional (meth)acrylate monomer units. Multifunctional acrylate monomer units are particularly useful for emulsion or syrup polymerization. Examples of useful multifunctional (meth)acrylate monomer units include, but are not limited to, di(meth)acrylates, tri(meth)acrylates, and tetra(meth)acrylates, such as 1,6-hexanediol di(meth)acrylate, poly(ethylene glycol) di(meth)acrylates, polybutadiene di(meth)acrylate, polyurethane di(meth)acrylates, and propoxylated glycerin tri(meth)acrylate, and mixtures thereof. The amount and identity of the particular multifunctional (meth)acrylate monomer unit is tailored depending upon application of the adhesive composition.

Typically, the multifunctional (meth)acrylate monomer unit is present in amounts less than 5 parts based on total dry weight of adhesive composition. More specifically, the multifunctional (meth)acrylate monomer unit (crosslinker) may be present in amounts from 0.01 to 5 parts, or even 0.05 to 1 parts, based on 100 parts total monomers of the low Tg (meth)acrylate copolymer.

According to an advantageous aspect of the multilayer pressure sensitive adhesive assembly according to the disclosure, the low Tg (meth)acrylate copolymer comprises:
i. from 60 to 99.5 parts by weight, from 65 to 99.5 parts by weight, from 65 to 99.5 parts by weight, from 70 to 99.5 parts by weight, from 75 to 99.5 parts by weight, from 80 to 99.5 parts by weight, from 85 to 99.5 parts by weight, or even from 85 to 98.5 parts by weight of C₁-C₃₂ (meth)acrylic acid ester monomer units, C₁-C₂₄ (meth)acrylic acid ester monomer units, or even C₁-C₁₈ (meth)acrylic acid ester monomer units;
ii. from 0.1 to 15 parts by weight, from 0.2 to 15 parts by weight, from 0.2 to 12 parts by weight, from 0.5 to 12 parts by weight, from 0.8 to 12 parts by weight, from 1.0 to 12 parts by weight, from 1.5 to 12 parts by weight, from 1.8 to 12 parts by weight, from 2.0 to 12 parts by weight, from 2.2 to 12 parts by weight, from 2.5 to 12 parts by weight, from 2.5 to 11 parts by weight, from 2.5 to 10 parts by weight, from 2.5 to 10 parts by weight, or even from 2.5 to 8 parts by weight of C₂-C₈ hydroxyalkyl (meth)acrylic acid ester monomer units,
iii. from 0.5 to 15 parts by weight of acid-functional ethylenically unsaturated monomer units;
iv. from 0 to 20 parts by weight of further non-acid functional, ethylenically unsaturated polar monomer units;
v. from 0 to 5 parts vinyl monomer units; and
vi. from 0 to 5 parts of multifunctional (meth)acrylate monomer units; based on 100 parts by weight of the total monomers of the low Tg copolymer.

According to another advantageous aspect of the multilayer pressure sensitive adhesive assembly according to the disclosure, the low Tg (meth)acrylate copolymer comprises:
i. from 60 to 99.5 parts by weight, from 65 to 99.5 parts by weight, from 65 to 99.5 parts by weight, from 70 to 99.5 parts by weight, from 75 to 99.5 parts by weight, from 80 to 99.5 parts by weight, from 85 to 99.5 parts by weight, or even from 85 to 98.5 parts by weight of (meth)acrylic acid ester monomer units of non-tertiary C₁-C₃₂ alcohols, non-tertiary C₁-C₂₄ alcohols, or even non-tertiary C₁-C₁₈ alcohols;
ii. from 0.1 to 15 parts by weight, from 0.2 to 15 parts by weight, from 0.2 to 12 parts by weight, from 0.5 to 12 parts by weight, from 0.8 to 12 parts by weight, from 1.0 to 12 parts by weight, from 1.5 to 12 parts by weight, from 1.8 to 12 parts by weight, from 2.0 to 12 parts by weight, from 2.2 to 12 parts by weight, from 2.5 to 12 parts by weight, from 2.5 to 11 parts by weight, from 2.5 to 10 parts by weight, from 2.5 to 10 parts by weight, or even from 2.5 to 8 parts by weight of C₂-C₈ hydroxyalkyl (meth)acrylic acid ester monomer units,
iii. from 0.5 to 15 parts by weight of acid-functional ethylenically unsaturated monomer units;
iv. from 0 to 20 parts by weight of further non-acid functional, ethylenically unsaturated polar monomer units;
v. from 0 to 5 parts vinyl monomer units; and
vi. from 0 to 5 parts of multifunctional (meth)acrylate monomer units; based on 100 parts by weight of the total monomers of the low Tg copolymer.

In some aspects, the low Tg copolymers may contain high Tg (meth)acrylic acid ester monomer units having glass transition temperatures of above 50°C, as a function of the homopolymer of said high Tg (meth)acrylic acid ester monomer units. The incorporation of small amounts of high Tg (meth)acrylic acid ester monomer units in the low Tg (meth)acrylate copolymer component improves the compatibility and stabilize the microphase morphology between the low-and high Tg (meth)acrylate copolymer components, particularly when the high Tg (meth)acrylic acid ester monomer unit is common to both (meth)acrylate copolymer components.

Suitable high Tg monomer units are (meth)acrylate acid esters and are described in more detail below. The low Tg (meth)acrylate copolymer may contain amounts of copolymerized high Tg (meth)acrylic acid ester monomer units such that the Tg of the (meth)acrylate copolymer is of below 20°C, preferably below 0°C, as estimated by the Fox Equation. Generally, the copolymer may contain from 1 to 20 parts by weight, or from 1 to 10 parts by weight in the low Tg (meth)acrylate copolymer based on 100 parts by weight total monomers of the low Tg (meth)acrylate copolymer. The high Tg (meth)acrylic acid ester monomer units of the low Tg (meth)acrylate copolymer may be incorporated in any manner. They may be part of the monomer mixture used in the preparation, whether by syrup, solvent or neat polymerization.

The low Tg (meth)acrylate copolymer may be prepared by any conventional free radical polymerization method, including solution, radiation, bulk, dispersion, emulsion, solventless, and suspension processes. The resulting adhesive (co)polymers may be random or block (co)polymers. Preferably, the low Tg (meth)acrylate copolymer component is generally prepared as either a solution or syrup copolymer composition.

A typical solution polymerization method is carried out by adding the monomers, a suitable solvent, and an optional chain transfer agent to a reaction vessel, adding a free radical initiator, purging with nitrogen, and maintaining the reaction vessel at an elevated temperature, typically in the range of 40 to 100°C until the reaction is completed, typically in 1 to 24 hours, depending upon the batch size and temperature. Examples of the solvent are methanol, tetrahydrofuran, ethanol, isopropanol, acetone, methyl ethyl ketone, methyl acetate, ethyl acetate, toluene, xylene, and an ethylene glycol alkyl ether. Those solvents can be used alone or as mixtures thereof.

A syrup polymer technique comprises partially polymerizing monomers to produce a syrup polymer comprising the low Tg (meth)acrylate copolymer and unpolymerized monomers. The syrup polymer composition is polymerized to a useful coating viscosity, which may be coated onto a substrate (such as a tape backing) and further polymerized. Partial polymerization provides a coatable solution of the acid functional (meth)acrylate solute copolymer in one or more solvent monomers. When high Tg (meth)acrylic acid ester monomer units are included, the initial monomer mixture may include the high Tg (meth)acrylic acid ester monomer units, and/or the high Tg (meth)acrylic acid ester monomer units may be added to the syrup polymer composition. In such aspects, the monomer mixture may be combined and partially polymerized to a suitable viscosity, then addition high Tg (meth)acrylic acid ester monomer units added.

The polymerizations may be conducted in the presence of, or preferably in the absence of, suitable solvents such as ethyl acetate, toluene and tetrahydrofuran which are unreactive with the functional groups of the components of the syrup polymer.

Polymerization can be accomplished by exposing the syrup polymer composition to energy in the presence of a photoinitiator. Energy activated initiators may be unnecessary where, for example, ionizing radiation is used to initiate polymerization. These photoinitiators can be employed in concentrations ranging from 0.0001 to 3. 0 pbw, preferably from 0.0001 to 1.0 pbw, and more preferably from 0.005 to 0.5 pbw, per 100 pbw of the total monomer of the low Tg (meth)acrylate syrup copolymer.

A preferred method of preparation of the coatable syrup polymer is photoinitiated free radical polymerization. Advantages of the photopolymerization method are that 1) heating the monomer solution is unnecessary and 2) photoinitiation is stopped completely when the activating light source is turned off. Polymerization to achieve a coatable viscosity may be conducted such that the conversion of monomers to polymer is up to 30%. Polymerization can be terminated when the desired conversion and viscosity have been achieved by removing the light source and by bubbling air (oxygen) into the solution to quench propagating free radicals.

The solute (co)polymer(s) may be prepared conventionally in a non-monomeric solvent and advanced to high conversion (degree of polymerization). When solvent (monomeric or non-monomeric) is used, the solvent may be removed (for example by vacuum distillation) either before or after formation of the syrup polymer. While an acceptable method, this procedure involving a highly converted functional polymer is not preferred because an additional solvent removal step is required, another material may be required (the non-monomeric solvent), and dissolution of the high molecular weight, highly converted solute polymer in the monomer mixture may require a significant period of time.

Useful photoinitiators include benzoin ethers such as benzoin methyl ether and benzoin isopropyl ether; substituted acetophenones such as 2, 2-dimethoxyacetophenone, available as Irgacure™ 651 photoinitiator (BASF, Ludwigshafen, Germany), 2,2 dimethoxy-2-phenyl-1-phenylethanone, available as Esacure™ KB-1 photoinitiator (Sartomer Co.; West Chester, PA), and dimethoxyhydroxyacetophenone; substituted α-ketols such as 2- methyl-2-hydroxy propiophenone; aromatic sulfonyl chlorides such as 2-naphthalene-sulfonyl chloride; and photoactive oximes such as 1-phenyl-1,2-propanedione-2-(O-ethoxy-carbonyl)oxime. Particularly preferred among these are the substituted acetophenones.

Preferred photoinitiators are photoactive compounds that undergo a Norrish I cleavage to generate free radicals that can initiate by addition to the acrylic double bonds. Additional photoinitiator can be added to the mixture to be coated after the copolymer has been formed, i.e., photoinitiator can be added to the syrup polymer mixture.

The syrup polymer composition and the photoinitiator may be irradiated with activating UV radiation to polymerize the monomer component(s). UV light sources can be of two types: 1) relatively low light intensity sources such as backlights which provide generally 10 mW/cm² or less (as measured in accordance with procedures approved by the United States National Institute of Standards and Technology as, for example, with a Uvimap^{tm} UM 365 L-S radiometer manufactured by Electronic Instrumentation & Technology, Inc., in Sterling, VA) over a wavelength range of 280 to 400 nanometers and 2) relatively high light intensity sources such as medium pressure mercury lamps which provide intensities generally greater than 10 mW/cm², preferably between 15 and 450 mW/cm². For example, an intensity of 600 mW/cm² and an exposure time of 1 second may be used successfully. Intensities can range from 0.1 to 150 mW/cm², preferably from 0. 5 to 100 mW/cm², and more preferably from 0. 5 to 50 mW/cm². Such photoinitiators preferably are present in an amount of from 0.1 to 1.0 pbw per 100 pbw of the syrup polymer composition.

The degree of conversion (of monomers to copolymer) can be monitored during the irradiation by measuring the index of refraction of the polymerizing. Useful coating viscosities are achieved with conversions (i.e. the percentage of available monomer polymerized) in the range of up to 30%, preferably 2-20%, more preferably from 5-15%, and most preferably from 7-12%. The molecular weight (weight average) of the solute polymer(s) is at least 100,000, preferably at least 250,000, more preferably at least 500,000.

It will be understood that a syrup polymerization method will produce a "dead polymer" in the initial free radical polymerization; i.e. a fully polymerized, not free-radically polymerizable polymer. Subsequently the solvent monomers do not free-radically polymerize onto the extant solute copolymer. Upon compounding the syrup polymer, further exposure to UV initiates free radical polymerization of the solvent monomers to produce a distinct copolymer. The syrup method provides advantages over solvent or solution polymerization methods; the syrup method yielding higher molecular weights. These higher molecular weights increase the amount of chain entanglements, thus increasing cohesive strength. Also, the distance between cross-links can be greater with high molecular syrup polymer, which allows for increased wet-out onto a surface.

According to the present disclosure, the first pressure sensitive adhesive composition for use herein comprises a high Tg (meth)acrylate copolymer having a weight average molecular weight (Mw) of above 20,000 Daltons, and comprising:
i. high Tg (meth)acrylic acid ester monomer units;
ii. optionally, acid functional ethylenically unsaturated monomer units;
iii. optionally, low Tg (meth)acrylic acid ester monomer units;
iv. optionally, non-acid functional, ethylenically unsaturated polar monomer units;
v. optionally, vinyl monomer units; and
vi. optionally, a chlorinated polyolefinic (co)polymer.

In a typical aspect, the high Tg (meth)acrylate copolymer for use herein, has a Tg of above 50°C, above 75°C, or even above 100°C, as estimated by the Fox equation.

According to a particular aspect, the high Tg (meth)acrylate copolymer for use herein has a weight average molecular weight (Mw) of above 25,000 Daltons, above 30,000 Daltons, above 35,000 Daltons, or even above 40,000 Daltons.

In another aspect, the high Tg (meth)acrylate copolymer for use herein has a weight average molecular weight (Mw) of below 100,000 Daltons, below 80,000 Daltons, below 75,000 Daltons, below 60,000 Daltons, below 50,000 Daltons, or even below 45,000 Daltons.

The high Tg (meth)acrylate copolymer may comprise 100 parts by weight of the high Tg monomer(s). In other aspects, the high Tg (meth)acrylate copolymer may comprise the additional monomer units, as described hereinbefore for the low Tg (meth)acrylate copolymer (supra), each in amounts such that the Tg of the resulting copolymer is above 50°C, above 75°C, or even above 100°C, as estimated by the Fox equation.

According to a beneficial aspect of the multilayer pressure sensitive adhesive assembly according to the disclosure, the high Tg (meth)acrylate copolymer comprises:
i. up to 100 parts by weight of high Tg (meth)acrylic acid ester monomer units;
ii. from 0 to 15, or even from 1 to 5 parts by weight of acid functional ethylenically unsaturated monomer units;
iii. from 0 to 50, or even from 1 to 25 parts by weight of optional low Tg (meth)acrylic acid ester monomer units;
iv. from 0 to 10, or even from 1 to 5 parts by weight of optional further non-acid functional, ethylenically unsaturated polar monomer units; and
v. from 0 to 5, or even from 1 to 5 parts by weight of optional vinyl monomer units;
based on 100 parts by weight of the total monomers of the high Tg (meth)acrylate copolymer.

Suitable high Tg (meth)acrylic acid ester monomer units for use herein may be advantageously selected from the group consisting of t-butyl (meth)acrylate, methyl (meth)acrylate, ethyl (meth)acrylate, isopropyl (meth)acrylate, n-butyl (meth)acrylate, isobutyl (meth)acrylate, s-butyl (meth)acrylate, t-butyl (meth)acrylate, stearyl (meth)acrylate, phenyl (meth)acrylate, cyclohexyl (meth)acrylate, isobornyl (meth)acrylate, isobornyl (meth)acrylate, benzyl (meth)acrylate, 3,3,5 trimethylcyclohexyl (meth)acrylate, cyclohexyl (meth)acrylate, N-octyl acrylamide, propyl (meth)acrylate, and any combinations or mixtures thereof.

Suitable low Tg (meth)acrylic acid ester monomer units for use herein include those having one ethylenically unsaturated group and a glass transition temperature of less than 0°C (as a function of the homopolymer). Exemplary low Tg (meth)acrylic acid ester monomer units for use herein include, but are not limited to, n-butyl acrylate, isobutyl acrylate, hexyl acrylate, 2-ethyl-hexylacrylate, isooctylacrylate, caprolactoneacrylate, isodecylacrylate, tridecylacrylate, laurylmethacrylate, methoxy-polyethylenglycol-monomethacrylate, laurylacrylate, tetrahydrofurfuryl-acrylate, ethoxy-ethoxyethyl acrylate and ethoxylated-nonylacrylate. Especially preferred are 2-ethyl-hexylacrylate, ethoxy-ethoxyethyl acrylate, tridecylacrylate and ethoxylated nonylacrylate. Other monomers may be used as described for the low Tg copolymer (*supra*).

The high Tg (meth)acrylate (co)polymer herein may be prepared by any conventional free radical polymerization method, including solution, radiation, bulk, dispersion, emulsion, and suspension processes. The resulting adhesive (co)polymers may be random or block (co)polymers.

The adhesive copolymers may be prepared via suspension polymerizations as disclosed in U.S. 3,691,140 (Silver); 4,166,152 (Baker et al.); 4,636,432 (Shibano et al); 4,656,218 (Kinoshita); and 5,045,569 (Delgado).

Polymerization via emulsion techniques may require the presence of an emulsifier (which may also be called an emulsifying agent or a surfactant). Useful emulsifiers for the present disclosure include those selected from the group consisting of anionic surfactants, cationic surfactants, nonionic surfactants, and mixtures thereof. Preferably, an emulsion polymerization is carried out in the presence of anionic surfactant(s). A useful range of surfactant concentration is from 0.5 to 8 weight percent, preferably from 1 to 5 weight percent, based on the total weight of all monomers of the emulsion pressure-sensitive adhesive.

Alternatively, the copolymers can be polymerized by techniques including, but not limited to, the conventional techniques of solvent polymerization, dispersion polymerization, and solventless bulk polymerization. The monomer mixture may comprise a polymerization initiator, especially a thermal initiator or a photoinitiator of a type and in an amount effective to polymerize the comonomers.

A typical solution polymerization method is carried out by adding the monomers, a suitable solvent, and an optional chain transfer agent to a reaction vessel, adding a free radical initiator, purging with nitrogen, and maintaining the reaction vessel at an elevated temperature, typically in the range of 40 to 100°C until the reaction is completed, typically in 1 to 20 hours, depending upon the batch size and temperature. Examples of the solvent are methanol, tetrahydrofuran, ethanol, isopropanol, acetone, methyl ethyl ketone, methyl acetate, ethyl acetate, toluene, xylene, and an ethylene glycol alkyl ether. Those solvents can be used alone or as mixtures thereof.

In a typical photopolymerization method, a monomer mixture may be irradiated with ultraviolet (UV) rays in the presence of a photopolymerization initiator (i.e., photoinitiators). Preferred photoinitiators are those available under the trade designations IRGACURE™ and DAROCUR™ from BASF and include 1-hydroxy cyclohexyl phenyl ketone (IRGACURE™ 184), 2,2-dimethoxy-1,2-diphenylethan-1-one (IRGACURE 651), *bis*(2,4,6-trimethylbenzoyl)phenylphosphineoxide (IRGACURE™ 819), 1-[4-(2-hydroxyethoxy)phenyl]-2-hydroxy-2-methyl-1-propane-1-one (IRGACURE™ 2959), 2-benzyl-2-dimethylamino-1-(4-morpholinophenyl)butanone (IRGACURE™ 369), 2-methyl-1-[4-(methylthio)phenyl]-2-morpholinopropan-1-one (IRGACURE™ 907), and 2-hydroxy-2-methyl-1-phenyl propan-1-one (DAROCUR™ 1173). Particularly preferred photoinitiators are IRGACURE™ 819, 651, 184 and 2959.

Solventless polymerization methods, such as the continuous free radical polymerization method described in U.S. Pat. Nos. 4,619,979 and 4,843,134 (Kotnour et al.); the essentially adiabatic polymerization methods using a batch reactor described in U.S. Pat. No. 5,637,646 (Ellis); and, the methods described for polymerizing packaged pre-adhesive compositions described in U.S. Pat. No. 5,804,610 (Hamer et al.) may also be utilized to prepare the polymers.

Water-soluble and oil-soluble initiators useful in preparing the high Tg (co)polymers used in the present disclosure are initiators that, on exposure to heat, generate free-radicals which initiate (co)polymerization of the monomer mixture. Water-soluble initiators are preferred for preparing the (meth)acrylate polymers by emulsion polymerization. Suitable water-soluble initiators include but are not limited to those selected from the group consisting of potassium persulfate, ammonium persulfate, sodium persulfate, and mixtures thereof; oxidation-reduction initiators such as the reaction product of the above-mentioned persulfates and reducing agents such as those selected from the group consisting of sodium metabisulfite and sodium bisulfite; and 4,4'-azobis(4-cyanopentanoic acid) and its soluble salts (e.g., sodium, potassium). The preferred water-soluble initiator is potassium persulfate. Suitable oil-soluble initiators include but are not limited to those selected from the group consisting of azo compounds such as VAZO™ 64 (2,2'-azobis(isobutyronitrile)) and VAZO™ 52 (2,2'-azobis(2,4-dimethylpentanenitrile)), both available from E.I. du Pont de Nemours Co., peroxides such as benzoyl peroxide and lauroyl peroxide, and mixtures thereof. The preferred oil-soluble thermal initiator is (2,2'-azobis(isobutyronitrile)). When used, initiators may comprise from 0.05 to 1 part by weight, or from 0.1 to 0.5 part by weight based on 100 parts by weight of monomer components in the first pressure-sensitive adhesive.

For both of the high and low Tg (meth)acrylate copolymers, a useful predictor of interpolymer Tg for specific combinations of various monomers can be computed by application of Fox Equation: 1/Tg = ∑Wi/Tgi. In this equation, Tg is the glass transition temperature of the mixture, Wi is the weight fraction of component i in the mixture, and Tgi is the glass transition temperature of component i, and all glass transition temperatures are in Kelvin (K). As used herein the term "high Tg monomer" refers to a monomer, which when homopolymerized, produce a (meth)acryloyl polymer having a Tg of above 50°C. The incorporation of the high Tg monomer to the high Tg (meth)acrylate copolymer is sufficient to raise the glass transition temperature of the resulting (meth)acrylate copolymer to above 50°C, above 75°C, or even above 100°C, as calculated using the Fox Equation.

If desired, a chain transfer agent may be added to the monomer mixture of either of the low- or high Tg (co)polymers to produce a (co)polymer having the desired molecular weight. A chain transfer is preferably used in the preparation of the high Tg (co)polymer. It has been observed that when the molecular weight of the high Tg (co)polymer is less than 20k, the peel performance at elevated temperatures is reduced. Further, when the M_{w} is greater than 100k, the immiscibility of the components is such that the tack of the composition is reduced.

Examples of useful chain transfer agents include but are not limited to those selected from the group consisting of carbon tetrabromide, alcohols, mercaptans, and mixtures thereof. When present, the preferred chain transfer agents are isooctylthioglycolate and carbon tetrabromide. The chain transfer agent may be used in amounts such that the high Tg (co)polymer has a M_{w} of greater than 20k, and preferable less than 100 k. The monomer mixture may further comprise up to 5 parts by weight of a chain transfer agent, typically 0.01 to 5 parts by weight, if used, preferably 0.5 parts by weight to 3 parts by weight, based upon 100 parts by weight of the total monomer mixture.

In order to increase cohesive strength of the first pressure sensitive adhesive composition, a crosslinking additive may be added to the adhesive composition - the combination of the high- and low Tg (co)polymers. Two main types of crosslinking additives are exemplary. The first crosslinking additive is a thermal crosslinking additive such as multifunctional aziridine, isocyanate and epoxy. One example of aziridine crosslinker is 1,1' -isophthaloyl-bis(2-methylaziridine (CAS No. 7652-64-4). Such chemical crosslinkers can be added into PSAs after polymerization and activated by heat during oven drying of the coated adhesive. Although polyfunctional (meth)acrylates may be included in the low Tg copolymer component and may function as crosslinking agents, additional crosslinking agents may be added. In still other methods of crosslinking, thermal crosslinkers may be used, optionally in combination with suitable accelerants and retardants. Suitable thermal crosslinkers for use herein include, but are not limited to, isocyanates, more particularly trimerized isocyanates and/or sterically hindered isocyanates that are free of blocking agents, or else epoxide compounds such as epoxide-amine crosslinker systems. Advantageous crosslinker systems and methods are described e.g. in the descriptions of DE202009013255 U1, EP 2 305 389 A, EP 2 414 143 A, EP 2 192 148 A, EP 2 186 869, EP 0 752 435 A, EP 1 802 722 A, EP 1 791 921 A, EP 1 791 922 A, EP 1 978 069 A, and DE 10 2008 059 050 A. Suitable accelerant and retardant systems for use herein are described e.g. in the description of US-A1- 2011/0281964. Suitable thermal crosslinkers for use herein include epoxycyclohexyl derivatives, in particular epoxycyclohexyl carboxylate derivatives, with particular preference to (3,4-epoxycyclohexane)methyl 3,4-epoxycyclohexylcarboxylate, commercially available from Cytec Industries Inc. under tradename UVACURE 1500. In another embodiment, chemical crosslinkers, which rely upon free radicals to carry out the crosslinking reaction, may be employed. Reagents such as, for example, peroxides serve as a source of free radicals. When heated sufficiently, these precursors will generate free radicals that bring a crosslinking reaction of the polymer. A common free radical generating reagent is benzoyl peroxide. Free radical generators are required only in small quantities, but generally require higher temperatures to complete a crosslinking reaction than those required for the bisamide and isocyanate reagents.

The second type of crosslinking additive is a photosensitive crosslinker, which is activated by high intensity ultraviolet (UV) light. Two common photosensitive crosslinkers used for acrylic PSAs are benzophenone and copolymerizable aromatic ketone monomers as described in U.S. Patent No. 4,737,559 (Kellen et al.). Another photocrosslinker, which can be post-added to the solution or syrup copolymer and activated by UV light is a triazine, for example, 2,4-bis(trichloromethyl)-6-(4-methoxy-phenyl)-s-triazine. In some embodiments, multifunctional acrylates may be used to increase the cohesive strength. Multi-functional acrylates are particularly useful for emulsion polymerization. Examples of useful multi-functional acrylate crosslinking agents include, but are not limited to, diacrylates, triacrylates, and tetraacrylates, such as 1,6-hexanediol diacrylate, poly(ethylene glycol) diacrylates, polybutadiene diacrylate, polyurethane diacrylates, and propoxylated glycerin triacrylate, and mixtures thereof.

Hydrolyzable, free-radically copolymerizable crosslinkers, such as monoethylenically unsaturated mono-, di-, and trialkoxy silane compounds including, but not limited to, methacryloxypropyltrimethoxysilane (available from Gelest, Inc., Tullytown, PA), vinyl dimethylethoxysilane, vinyl methyl diethoxysilane, vinyltriethoxysilane, vinyltrimethoxysilane, vinyltriphenoxysilane, and the like, are also useful crosslinking agents.

The amount and identity of the crosslinking agent is tailored depending upon application of the adhesive composition. If present, a crosslinker can be used in any suitable amount. Typically, the crosslinking agent is present in amounts less than 5 parts based on total dry weight of adhesive composition. More specifically, the crosslinker may be present in amounts from 0.01 to 5 parts, preferably 0.05 to 1 parts, based on 100 parts total monomers of the low Tg copolymer.

In the context of the present disclosure, the first pressure sensitive adhesive composition comprises a crosslinking agent which is preferably selected from the group consisting of multifunctional aziridines, multifunctional isocyanates, multifunctional epoxides, benzophenone, triazines, multifunctional acrylates, multifunctional carboxylates, oxetanes, oxazolines, and any combinations or mixtures thereof. In a more preferred aspect, the crosslinking agent is selected from the group consisting of multifunctional acrylates.

The first pressure sensitive adhesive composition for use herein may optionally comprise a hydrogenated hydrocarbon tackifier in order to improve its adhesion properties, i.e. develop more aggressive tack.

Due to the high solubility parameter of most conventional pressure-sensitive acrylic adhesives and the presence of specific potential interactions between these adhesives and many tackifiers, a limited selection of tackifiers is available to the formulator. As a consequence, hydrocarbon-based tackifiers, and especially hydrogenated hydrocarbon resins, have been considered unsuitable for use in acrylic adhesives formulations due to their nonpolar character.

However, such hydrogenated hydrocarbon tackifiers may be advantageously used, as an optional ingredient, in combination with the high- and low Tg (meth)acrylate copolymers described *supra.* The tackifiers are typically used in amounts sufficient to strengthen the partial phase separation extent in the system. The incompatibility provided by such tackifiers may be used to produce pressure-sensitive adhesive compositions. As result of the incompatibility, it is observed that the glass transition of the adhesive composition is further broadened, relative to the combination of the high- and low Tg copolymers, which consequentially further improves its overall adhesions on LSE or even MSE substrates. If a compatible tackifier (those having good compatibility with the low Tg acrylic polymers) is added to a high- and low Tg copolymers blend, a significant drop in adhesion on LSE substrates is generally observed, and the advantageous effects from the phase separation of high- and low Tg copolymers may be generally lost.

Hydrogenated hydrocarbon tackifiers are traditionally used in more rubber-based adhesives rather than acrylic-based pressure sensitive adhesives. The hydrogenated hydrocarbon tackifiers are found to be particularly useful in the acrylate -based pressure sensitive adhesives for low surface energy substrates disclosed herein. Exemplary hydrogenated hydrocarbon tackifiers include C9 and C5 hydrogenated hydrocarbon tackifiers. Examples of C9 hydrogenated hydrocarbon tackifiers include those sold under the trade designation: "REGALITE S-5100", "REGALITE R-7100", "REGALITE R-9100", "REGALITE R-1125", "REGALITE S-7125", "REGALITE S-1100", "REGALITE R-1090", "REGALREZ 6108", "REGALREZ 1085", "REGALREZ 1094", "REGALREZ 1126", "REGALREZ 1139", and "REGALREZ 3103", sold by Eastman Chemical Co., Middelburg, Netherlands; "PICCOTAC" and EASTOTAC" sold by Eastman Chemical Co.; "ARKON P-140", "ARKON P-125", "ARKON P-115", "ARKON P-100", "ARKON P-90", "ARKON M-135", "ARKON M-115", "ARKON M-100", and "ARKON M-90" sold by Arakawa Chemical Inc., Chicago, IL; and "ESCOREZ 5000 series" sold by Exxon Mobil Corp., Irving, TX. Of particular interest are partially hydrogenated C9 hydrogenated tackifiers, preferably fully hydrogenated C9 hydrogenated tackifiers.

According to an exemplary aspect of the multilayer pressure sensitive adhesive assembly according to the disclosure, the first pressure sensitive adhesive composition comprises from 0.1 to 20 parts by weight, from 0.5 to 20 parts by weight, from 1 to 15 parts by weight, from 2 to 15 parts by weight, or even from 5 to 15 parts by weight of a hydrogenated hydrocarbon tackifier, preferably a fully hydrogenated hydrocarbon tackifier, based on 100 parts by weight of the low- and high- Tg (meth)acrylate copolymers.

Other additives can be added in order to enhance the performance of the first pressure sensitive adhesive composition. For example, leveling agents, ultraviolet light absorbers, hindered amine light stabilizers (HALS), oxygen inhibitors, wetting agents, rheology modifiers, defoamers, biocides, dyes and the like, can be included herein. All these additives and the use thereof are well known in the art. It is understood that any of these compounds can be used so long as they do not deleteriously affect the adhesive properties.

Useful as additives to the first pressure sensitive adhesive composition are UV absorbers and hindered amine light stabilizers. UV absorbers and hindered amine light stabilizers act to diminish the harmful effects of UV radiation on the final cured product and thereby enhance the weatherability, or resistance to cracking, yellowing and delamination of the coating. A preferred hindered amine light stabilizer is bis(1,2,2,6,6-pentamethyl-4-piperidinyl) [3,5-bis(1,1-dimethylethyl-4-hydroxyphenyl)methyl]butylpropanedioate, available as Tinuvin™144, from BASF.

In one particular aspect, the first pressure sensitive adhesive composition may include filler. Such compositions may include at least 40 wt-%, at least 45 wt-%, or even at least 50 wt-% filler, based on the total weight of the composition. In another particular aspect, the total amount of filler is at most 90 wt-%, at most 80 wt-%, or even at most 75 wt-% filler.

Fillers may be selected from one or more of a wide variety of materials, as known in the art, and include organic and inorganic filler. Inorganic filler particles include silica, submicron silica, zirconia, submicron zirconia, and non-vitreous microparticles of the type described in U.S. Pat. No. 4,503,169 (Randklev).

Filler components include nanosized silica particles, nanosized metal oxide particles, and combinations thereof. Nanofillers are also described in U.S. Pat. Nos. 7,090,721 (Craig et al.), 7,090,722 (Budd et al.), 7,156,911(Kangas et al.), and 7,649,029 (Kolb et al.).

Fillers may be either particulate or fibrous in nature. Particulate fillers may generally be defined as having a length to width ratio, or aspect ratio, of 20:1 or less, and more commonly 10:1 or less. Fibers can be defined as having aspect ratios greater than 20:1, or more commonly greater than 100:1. The shape of the particles can vary, ranging from spherical to ellipsoidal, or more planar such as flakes or discs. The macroscopic properties can be highly dependent on the shape of the filler particles, in particular the uniformity of the shape.

One particularly advantageous additive that may be incorporated in the first pressure sensitive adhesive composition is represented by chlorinated polyolefinic (co)polymers. Incorporating chlorinated polyolefinic (co)polymers in the first pressure sensitive adhesive composition significantly improves the stability upon heat bond ageing and heat/humidity bond ageing of the resulting pressure sensitive adhesive polymer layer, in particular on low surface energy (LSE) substrates.

Examples of suitable chlorinated polyolefinic (co)polymers for use herein include those sold under the trade designation: "CP 343-1", sold by Eastman Chemical Co.; "13-LP", "15-LP", "16-LP" and "17-LP" sold by Toyo Kasei Kogyo Co.Ltd; "Hypalon™ CP 827B", " Hypalon™ CP 163 " and " Hypalon™ CP 183 " sold by DuPont Co.; and "Tyrin™ CPE 4211P", "Tyrin™ CPE 6323A" and "Tyrin™ CPE 3615P" sold by Dow Chemical Co. In a preferred aspect, "CP 343-1" is used as chlorinated polyolefinic (co)polymer.

According to a preferred aspect of the present disclosure, the first pressure sensitive adhesive composition comprises a chlorinated polyolefinic (co)polymer, which is selected from the group consisting of chlorinated polypropylene, chlorinated polyethylene, chlorinated ethylene/vinyl acetate copolymer, and any combinations, mixtures or copolymers thereof. More preferably, the chlorinated polyolefinic (co)polymer is selected from the group of chlorinated polypropylenes.

The chlorinated polyolefinic (co)polymers, if present, are typically used in amounts of from 0.1 and 15 parts by weight, from 0.1 and 10 parts by weight, from 0.2 and 5 parts by weight, from 0.2 and 3 parts by weight, or even from 0.2 and 2 parts by weight based 100 parts of the low- and high- Tg (meth)acrylate (co)polymers.

The first pressure sensitive adhesive composition is generally prepared by simple blending of the high- and low Tg (meth)acrylate copolymer components, optionally with the tackifier. The polymers can be blended using several methods. The polymers can be blended by melt blending, solvent blending, or any suitable physical means. For example, the polymers can be melt blended by a method as described by Guerin et al. in U.S. Pat. No. 4,152,189. That is, all solvent (if used) is removed from each polymer by heating to a temperature of 150°C to 175°C at a reduced pressure. Although melt blending may be used, the adhesive blends of the present disclosure can also be processed using solvent blending. The acidic and basic polymers should be substantially soluble in the solvents used.

Physical blending devices that provide dispersive mixing, distributive mixing, or a combination of dispersive and distributive mixing are useful in preparing homogenous blends. Both batch and continuous methods of physical blending can be used. Examples of batch methods include BRABENDER (using a BRABENDER PREP CENTER, available from C. W. Brabender Instruments, Inc.; South Hackensack, N.J.) or BANBURY internal mixing and roll milling (using equipment available from FARREL COMPANY; Ansonia, Conn.). Examples of continuous methods include single screw extruding, twin screw extruding, disk extruding, reciprocating single screw extruding, and pin barrel single screw extruding. The continuous methods can include utilizing both distributive elements, such as cavity transfer elements (e.g., CTM, available from RAPRA Technology, Ltd.; Shrewsbury, England) and pin mixing elements, static mixing elements and dispersive elements (e.g., MADDOCK mixing elements or SAXTON mixing elements as described in "Mixing in Single-Screw Extruders," Mixing in Polymer Processing, edited by Chris Rauwendaal (Marcel Dekker Inc.: New York (1991), pp. 129, 176-177, and 185-186).

In aspects where the low Tg (meth)acrylate copolymer component is a solution copolymer, the low Tg (meth)acrylate copolymer in a solvent is combined with the high Tg (meth)acrylate (co)polymer and optionally the tackifier, mixed until homogenous, optionally coated, and dried to remove the solvent. When the low Tg (meth)acrylate polymer component is a syrup copolymer, the syrup copolymer is combined with the high Tg (meth)acrylate (co)polymer and optionally the tackifier, optional additional solvent monomer added, optionally coated and further polymerized.

The first pressure sensitive adhesive composition comprises at least 60 parts by weight, preferably at least 70 parts by weight, more preferably at least 80 parts by weight, of the low Tg (meth)acrylate copolymer component, which may be in the form of a solution or a syrup copolymer; up to 40 parts by weight, preferably 5 to 40 parts by weight, of the high Tg (meth)acrylate (co)polymer, with the sum of the high- and low Tg (co)polymer components 100 parts by weight. The tackifier, if present, is used in amounts sufficient to effect a partial phase separation of the components, and is generally used in amounts of 0.1 to 15 parts, preferably 0.1 to 10 parts by weight, relative to 100 parts by weight of the high-and low Tg (meth)acrylate (co)polymer components.

It is observed that the combination of the low Tg and high Tg (meth)acrylate (co)polymer components yields a microphase-separated pressure-sensitive adhesive after curing or drying wherein the low Tg (meth)acrylate copolymer is a continuous phase and the high Tg (meth)acrylate (co)polymer exists as relatively uniformly-shaped inclusions ranging in size from 0.01 micrometer to 0.1 micrometer. The microphase domains are separated by a diffuse boundary caused by the intermixing of the partially incompatible components at the interfaces. It is also observed that the microphase separation broadens of the glass transition of the adhesive composition, relative to that of the composition where the high and low Tg monomer units are copolymerized in a random fashion. One estimate of this effect is the peak width at a fixed height (FHPW) at half of the peak intensity of the Tan Delta curve from a dynamic mechanical analysis.

Surprisingly, the first pressure sensitive adhesive composition which exhibits microphase separation, provides substantial improvement in both peel adhesion and shear-holding capability on challenging-to-bond substrates, particularly LSE and MSE substrates, more particularly, LSE substrates, when compared to compositions having a homogenous structure or those having macro-phase separation. In particular, exceptional improvements in adhesion properties at elevated temperatures are achieved. Without wishing to be bound by theory, it is believed that such advantageous phase-separating effects are dependent on the weight average molecular weight (Mw) of the high Tg (co)polymer. If the weight average molecular weight (Mw) of the high Tg (co)polymer is less than 20.000 Daltons, the phase-separating effects are not sufficient to yield satisfactory adhesion performances at elevated temperatures.

The first pressure sensitive adhesive composition, which exhibits microphase separation, provides substantial improvement in both peel adhesion while maintaining acceptable values for other adhesive properties such as shear, when compared to compositions having a homogenous structure or those having macro-phase separation.

According to the present disclosure, the second pressure sensitive adhesive composition comprises:
a) a first (meth)acrylate copolymer comprising from 0.1 to 12 wt% of (meth)acrylic acid monomer units, based on the weight of the first (meth)acrylate copolymer;
b) a second (meth)acrylate copolymer comprising from 15 to 40 wt% of (meth)acrylic acid monomer units, based on the weight of the second (meth)acrylate copolymer; and
c) optionally, a hollow non-porous particulate filler material.

According to a typical aspect of the second pressure sensitive adhesive composition for use herein, the first (meth)acrylate copolymer and/or the second (meth)acrylate copolymer, preferably the first (meth)acrylate copolymer and the second (meth)acrylate copolymer, comprise linear or branched C₁-C₃₂ (meth)acrylic acid ester monomer units, C₁-C₂₄ (meth)acrylic acid ester monomer units, or even C₁-C₁₈ (meth)acrylic acid ester monomer units, as main monomers units.

According to another typical aspect of the second pressure sensitive adhesive composition for use herein, the first (meth)acrylate copolymer and/or the second (meth)acrylate copolymer, preferably the first (meth)acrylate copolymer and the second (meth)acrylate copolymer, comprise, as main monomer units, linear or branched alkyl (meth)acrylate ester monomer units selected from the group consisting of methyl (meth)acrylate, ethyl (meth)acrylate, n-propyl (meth)acrylate, isopropyl (meth)acrylate, n-butyl acrylate, isobutyl acrylate, tert-butyl (meth)acrylate, n-pentyl (meth)acrylate, iso-pentyl (meth)acrylate, n-hexyl (meth)acrylate, iso-hexyl (meth)acrylate, cyclohexyl (meth)acrylate, phenyl (meth)acrylate, octyl (meth)acrylate, iso-octyl (meth)acrylate, 2-octyl(meth)acrylate, 2-ethylhexyl (meth)acrylate, decyl (meth)acrylate, undecyl (meth)acrylate, lauryl (meth)acrylate, tridecyl (meth)acrylate, tetradecyl (meth)acrylate, pentadecyl (meth)acrylate, hexadecyl (meth)acrylate, heptadecyl (meth)acrylate, 2-propylheptyl (meth)acrylate, stearyl (meth)acrylate, isobornyl (meth)acrylate, benzyl (meth)acrylate, nonyl (meth)acrylate, isophoryl (meth)acrylate, and any combinations or mixtures thereof.

In an exemplary aspect, the first (meth)acrylate copolymer and/or the second (meth)acrylate copolymer, preferably the first (meth)acrylate copolymer and the second (meth)acrylate copolymer, comprise, as main monomer units, linear or branched alkyl (meth)acrylate ester monomer units selected from the group consisting of 2-ethylhexyl (meth)acrylate, 2-propylheptyl (meth)acrylate, iso-octyl (meth)acrylate, and any combinations or mixtures thereof.

In still another exemplary aspect, the first (meth)acrylate copolymer and/or the second (meth)acrylate copolymer, preferably the first (meth)acrylate copolymer and the second (meth)acrylate copolymer, comprise 2-ethylhexyl (meth)acrylate monomers, as main monomer units.

According to an advantageous aspect of the second pressure sensitive adhesive composition for use herein, the second (meth)acrylate copolymer for use herein comprises (meth)acrylic acid monomer units in an amount greater than 15 wt%, greater than 16 wt%, or even greater than 17 wt%, based on the weight of the first (meth)acrylate copolymer.

In a preferred aspect of the second pressure sensitive adhesive composition for use herein, the first (meth)acrylate copolymer for use herein comprises from 0.1 to 11 wt%, from 0.1 to 10 wt%, from 0.2 to 10 wt%, from 0.2 to 9 wt%, from 0.2 to 8 wt%, from 0.3 to 8 wt%, from 0.5 to 8 wt%, from 0.5 to 6 wt%, from 1 to 6 wt%, or even from 1 to 5 wt%, of (meth)acrylic acid monomer units, based on the weight of the first (meth)acrylate copolymer.

Preferably still, the second (meth)acrylate copolymer for use herein comprises from 16 to 40 wt%, from 16 to 35 wt%, from 16 to 30 wt%, from 16 to 25 wt%, from 17 to 25 wt%, from 17 to 23 wt%, or even from 17 to 20 wt% of (meth)acrylic acid monomer units, based on the weight of the second (meth)acrylate copolymer.

In a typical aspect of the second pressure sensitive adhesive composition for use herein, the first (meth)acrylate copolymer for use herein has a Tg no greater than 0°C. Typically still, the second (meth)acrylate copolymer for use herein has a Tg greater than 0°C.

According to a preferred aspect of the second pressure sensitive adhesive composition for use herein, the first (meth)acrylate copolymer for use herein has Tg comprised between -70°C and 0°C, between -70°C and -10°C, -60°C and -10°C, between - 60°C and -20°C, between -60°C and -30°C, between -55°C and -35°C, or even between - 50°C and -40°C.

Preferably still, the second (meth)acrylate copolymer has Tg comprised between 2°C and 100°C, between 2°C and 80°C, between 2°C and 60°C, between 2°C and 50°C, between 2°C and 45°C, between 5°C and 45°C, between 5°C and 40°C, between 5°C and 35°C, or even between 10°C and 30°C.

In an advantageous aspect of the second pressure sensitive adhesive composition for use herein, the second (meth)acrylate copolymer for use herein has a Tg no greater than 100°C, no greater than 80°C, no greater than 60°C, no greater than 50°C, no greater than 45°C, or even no greater than 40°C.

According to a beneficial aspect, the second pressure sensitive adhesive composition for use herein comprises from 65 to 99 wt%, from 70 to 95 wt%, from 75 to 95 wt%, from 75 to 90 wt%, or even from75 to 85 wt%, of the first (meth)acrylate copolymer, and wherein the weight percentages are based on the total weight of the second pressure sensitive adhesive composition.

Beneficially still, the second pressure sensitive adhesive composition for use herein comprises from 1 to 35 wt%, from 1 to 30 wt%, from 2 to 25 wt%, from 3 to 25 wt%, from 3 to 20 wt%, from 4 to 20 wt%, or even from 4 to 15 wt%, of the second (meth)acrylate copolymer, and wherein the weight percentages are based on the total weight of the second pressure sensitive adhesive composition.

According to a preferred aspect of the present disclosure, the first (meth)acrylate copolymer for use herein comprises:
a) from 0.1 to 11 wt%, from 0.1 to 10 wt%, from 0.2 to 10 wt%, from 0.2 to 9 wt%, from 0.2 to 8 wt%, from 0.3 to 8 wt%, from 0.5 to 8 wt%, from 0.5 to 6 wt%, from 1 to 6 wt%, or even from 1 to 5 wt%, of (meth)acrylic acid monomer units, based on the weight of the first (meth)acrylate copolymer; and
b) from 89 to 99.9 wt%, from 90 to 99.9 wt%, from 90 to 99.8 wt%, from 91 to 99.8 wt%, from 92 to 99.8 wt%, from 92 to 99.7 wt%, from 92 to 99.5 wt%, from 94 to 99.5 wt%, from 94 to 99 wt%, or even from 95 to 99 wt%, of linear or branched C₁-C₃₂ (meth)acrylic acid ester monomer units, C₁-C₂₄ (meth)acrylic acid ester monomer units, or even C₁-C₁₈ (meth)acrylic acid ester monomer units, based on the weight of the first (meth)acrylate copolymer.

According to another preferred aspect of the present disclosure, the second (meth)acrylate copolymer for use herein comprises:
a) comprises from 13 to 35 wt%, from 13 to 30 wt%, from 15 to 30 wt%, from 15 to 25 wt%, or even from 17 to 23 wt%, of (meth)acrylic acid monomer units, based on the weight of the second (meth)acrylate copolymer; and
b) from 65 to 87 wt%, from 70 to 87 wt%, from 70 to 85 wt%, from 75 to 85 wt%, or even from 77 to 83 wt%, of linear or branched C₁-C₃₂ (meth)acrylic acid ester monomer units, C₁-C₂₄ (meth)acrylic acid ester monomer units, or even C₁-C₁₈ (meth)acrylic acid ester monomer units, based on the weight of the second (meth)acrylate copolymer.

The first (meth)acrylate copolymer for use herein may be prepared by any conventional free radical polymerization method, including solution, radiation, bulk, dispersion, emulsion, solventless, and suspension processes. The resulting copolymers may be random or block copolymers. In a preferred aspect, the low Tg (meth)acrylate copolymer component is generally prepared as either a solution or syrup copolymer composition.

A typical solution polymerization method is carried out by adding the monomers, a suitable solvent, and an optional chain transfer agent to a reaction vessel, adding a free radical initiator, purging with nitrogen, and maintaining the reaction vessel at an elevated temperature, typically in the range of 40 to 100°C until the reaction is completed, typically in 1 to 24 hours, depending upon the batch size and temperature. Examples of the solvent are methanol, tetrahydrofuran, ethanol, isopropanol, tert-butanol, acetone, methyl ethyl ketone, methyl acetate, ethyl acetate, toluene, xylene, and an ethylene glycol alkyl ether. Those solvents can be used alone or as mixtures thereof.

A syrup polymer technique comprises partially polymerizing monomers to produce a syrup polymer comprising the first (meth)acrylate copolymer and unpolymerized monomers. The syrup polymer composition is polymerized to a useful coating viscosity, which may be coated onto a substrate (such as a tape backing) and further polymerized.

The polymerizations may be conducted in the presence of, or preferably in the absence of, suitable solvents such as ethyl acetate, toluene and tetrahydrofuran which are unreactive with the functional groups of the components of the syrup polymer.

A preferred method of preparation of the coatable syrup polymer is photoinitiated free radical polymerization. Advantages of the photopolymerization method are that 1) heating the monomer solution is unnecessary and 2) photoinitiation is stopped completely when the activating light source is turned off. Polymerization to achieve a coatable viscosity may be conducted such that the conversion of monomers to polymer is up to 10%. Polymerization can be terminated when the desired conversion and viscosity have been achieved by removing the light source and by bubbling air (oxygen) into the solution to quench propagating free radicals.

Polymerization can be accomplished by exposing the syrup polymer composition to energy in the presence of a photoinitiator. Energy activated initiators may be unnecessary where, for example, ionizing radiation is used to initiate polymerization.

Useful photoinitiators include benzoin ethers such as benzoin methyl ether and benzoin isopropyl ether; substituted acetophenones such as 2, 2-dimethoxyacetophenone, available as Irgacure™ 651 photoinitiator (BASF, Ludwigshafen, Germany), 2,2 dimethoxy-2-phenyl-1-phenylethanone, available as Esacure™ KB-1 photoinitiator (Sartomer Co.; West Chester, PA), and dimethoxyhydroxyacetophenone; substituted α-ketols such as 2- methyl-2-hydroxy propiophenone; aromatic sulfonyl chlorides such as 2-naphthalene-sulfonyl chloride; and photoactive oximes such as 1-phenyl-1,2-propanedione-2-(O-ethoxy-carbonyl)oxime. Particularly preferred among these are the substituted acetophenones.

Preferred photoinitiators are photoactive compounds that undergo a Norrish I cleavage to generate free radicals that can initiate by addition to the acrylic double bonds. Additional photoinitiator can be added to the mixture to be coated after the copolymer has been formed, i.e., photoinitiator can be added to the syrup polymer mixture.

The degree of conversion (of monomers to copolymer) can be monitored during the irradiation by measuring the index of refraction of the polymerizing mixture.

The second (meth)acrylate copolymer for use herein may be prepared by any conventional free radical polymerization method, including solution, radiation, bulk, dispersion, emulsion, and suspension processes. The resulting adhesive copolymers may be random or block copolymers.

The second (meth)acrylate copolymer for use herein can be polymerized by techniques including, but not limited to, the conventional techniques of solvent polymerization, dispersion polymerization, and solventless bulk polymerization. The monomer mixture may comprise a polymerization initiator, especially a thermal initiator or a photoinitiator of a type and in an amount effective to polymerize the comonomers.

A typical solution polymerization method is carried out by adding the monomers, a suitable solvent, and an optional chain transfer agent to a reaction vessel, adding a free radical initiator, purging with nitrogen, and maintaining the reaction vessel at an elevated temperature, typically in the range of 40 to 100°C until the reaction is completed, typically in 1 to 20 hours, depending upon the batch size and temperature. Examples of the solvent are methanol, tetrahydrofuran, ethanol, isopropanol, tert-butanol, acetone, methyl ethyl ketone, methyl acetate, ethyl acetate, toluene, xylene, and an ethylene glycol alkyl ether. Those solvents can be used alone or as mixtures thereof.

In a typical photopolymerization method, a monomer mixture may be irradiated with ultraviolet (UV) rays in the presence of a photopolymerization initiator (i.e., photoinitiators). Exemplary photoinitiators are those available under the trade designations IRGACURE™ and DAROCUR™ from BASF and include 1-hydroxy cyclohexyl phenyl ketone (IRGACURE™ 184), 2,2-dimethoxy-1,2-diphenylethan-1-one (IRGACURE 651), *bis*(2,4,6-trimethylbenzoyl)phenylphosphineoxide (IRGACURE™ 819), 1-[4-(2-hydroxyethoxy)phenyl]-2-hydroxy-2-methyl-1-propane-1-one (IRGACURE™ 2959), 2-benzyl-2-dimethylamino-1-(4-morpholinophenyl)butanone (IRGACURE™ 369), 2-methyl-1-[4-(methylthio)phenyl]-2-morpholinopropan-1-one (IRGACURE™ 907), and 2-hydroxy-2-methyl-1-phenyl propan-1-one (DAROCUR™ 1173). Preferred photoinitiators are IRGACURE™ 819, 651, 184 and 2959.

In a typical thermal polymerization method, a monomer mixture may be subjected to thermal energy in the presence of a thermal polymerization initiator (i.e., thermal initiators). Exemplary thermal initiators are those available under the trade designations VAZO™ from DuPont.

Solventless polymerization methods, such as the continuous free radical polymerization method described in U.S. Pat. Nos. 4,619,979 and 4,843,134 (Kotnour et al.); the essentially adiabatic polymerization methods using a batch reactor described in U.S. Pat. No. 5,637,646 (Ellis); and, the methods described for polymerizing packaged pre-adhesive compositions described in U.S. Pat. No. 5,804,610 (Hamer et al.) may also be utilized to prepare the second (meth)acrylate copolymer.

In a preferred aspect, the second (meth)acrylate copolymer for use herein is prepared using an essentially solventless free-radical polymerization method, in particular an essentially solventless thermal free-radical polymerization method.

According to an advantageous aspect, the second (meth)acrylate copolymer for use herein is prepared by an essentially adiabatic polymerization method.

The degree of conversion (of monomers to copolymer) can be monitored during the irradiation by measuring the index of refraction of the polymerizing mixture.

According to an advantageous aspect, the second (meth)acrylate copolymer of step a) is obtained as a pre-polymer composition having a polymer conversion rate greater than 10%, greater than 15%, greater than 20%, greater than 25%, greater than 30%, greater than 35%, greater than 40%, or even greater than 45%.

According to another advantageous aspect, the second (meth)acrylate copolymer of step a) is obtained as a pre-polymer composition having a polymer conversion rate comprised between 10 and 60%, between 20 and 55%, between 30 and 50%, or even between 35 and 50%.

If desired, a chain transfer agent may be added to the monomer mixture of either of the first or the second (meth)acrylate copolymers to produce a copolymer having the desired molecular weight.

Examples of useful chain transfer agents include but are not limited to those selected from the group consisting of carbon tetrabromide, alcohols, mercaptans, and mixtures thereof. When present, the preferred chain transfer agents are isooctylthioglycolate and carbon tetrabromide.

In order to increase cohesive strength of the second pressure-sensitive adhesive composition, a crosslinking additive may be added to the adhesive composition comprising the combination of the first and the second (meth)acrylate copolymers. Two main types of crosslinking additives are exemplary. The first crosslinking additive is a thermal crosslinking additive such as multifunctional aziridine, isocyanate and epoxy. One example of aziridine crosslinker is 1,1' -isophthaloyl-bis(2-methylaziridine (CAS No. 7652-64-4). Such chemical crosslinkers can be added into PSAs after polymerization and activated by heat during oven drying of the coated adhesive. Although polyfunctional (meth)acrylates may be included in the copolymer component(s) and may function as crosslinking agents, additional crosslinking agents may be added. In still other methods of crosslinking, thermal crosslinkers may be used, optionally in combination with suitable accelerants and retardants. Suitable thermal crosslinkers for use herein include, but are not limited to, isocyanates, more particularly trimerized isocyanates and/or sterically hindered isocyanates that are free of blocking agents, or else epoxide compounds such as epoxide-amine crosslinker systems. Advantageous crosslinker systems and methods are described e.g. in the descriptions of DE202009013255 U1, EP 2 305 389 A, EP 2 414 143 A, EP 2 192 148 A, EP 2 186 869, EP 0 752 435 A, EP 1 802 722 A, EP 1 791 921 A, EP 1 791 922 A, EP 1 978 069 A, and DE 10 2008 059 050 A. Suitable accelerant and retardant systems for use herein are described e.g. in the description of US-A1- 2011/0281964. Suitable thermal crosslinkers for use herein include epoxycyclohexyl derivatives, in particular epoxycyclohexyl carboxylate derivatives, with particular preference to (3,4-epoxycyclohexane)methyl 3,4-epoxycyclohexylcarboxylate, commercially available from Cytec Industries Inc. under tradename UVACURE 1500.

In another aspect, chemical crosslinkers, which rely upon free radicals to carry out the crosslinking reaction, may be employed. Reagents such as, for example, peroxides serve as a source of free radicals. When heated sufficiently, these precursors will generate free radicals that bring a crosslinking reaction of the polymer. A common free radical generating reagent is benzoyl peroxide. Free radical generators are required only in small quantities, but generally require higher temperatures to complete a crosslinking reaction than those required for the bisamide and isocyanate reagents.

The second type of crosslinking additive is a photosensitive crosslinker, which is activated by high intensity ultraviolet (UV) light. Two common photosensitive crosslinkers used for acrylic PSAs are benzophenone and copolymerizable aromatic ketone monomers as described in U.S. Patent No. 4,737,559 (Kellen et al.). Another photocrosslinker, which can be post-added to the solution or syrup copolymer and activated by UV light is a triazine, for example, 2,4-bis(trichloromethyl)-6-(4-methoxy-phenyl)-s-triazine. In some aspects, multifunctional acrylates may be used to increase the cohesive strength. Multi-functional acrylates are particularly useful for emulsion polymerization. Examples of useful multi-functional acrylate crosslinking agents include, but are not limited to, diacrylates, triacrylates, and tetraacrylates, such as 1,6-hexanediol diacrylate, poly(ethylene glycol) diacrylates, polybutadiene diacrylate, polyurethane diacrylates, and propoxylated glycerin triacrylate, and mixtures thereof.

The amount and identity of the crosslinking agent is tailored depending upon application of the adhesive composition. If present, a crosslinker can be used in any suitable amount. Typically, the crosslinking agent is present in amounts less than 5 parts based on total dry weight of adhesive composition.

In the context of the present disclosure, the second pressure sensitive adhesive composition may comprise a crosslinking agent which is preferably selected from the group consisting of multifunctional aziridines, multifunctional isocyanates, multifunctional epoxides, benzophenone, triazines, multifunctional acrylates, multifunctional carboxylates, oxetanes, oxazolines, and any combinations or mixtures thereof. In a more preferred aspect, the crosslinking agent is selected from the group consisting of multifunctional acrylates.

The second pressure sensitive adhesive composition may comprise, as optional ingredients, tackifying resins, in particular hydrogenated hydrocarbon tackifiers. Exemplary hydrogenated hydrocarbon tackifiers include C9 and C5 hydrogenated hydrocarbon tackifiers. Examples of C9 hydrogenated hydrocarbon tackifiers include those sold under the trade designation: "REGALITE S-5100", "REGALITE R-7100", "REGALITE R-9100", "REGALITER-1125", "REGALITE S-7125", "REGALITE S-1100", "REGALITE R-1090", "REGALREZ 6108", "REGALREZ 1085", "REGALREZ 1094", "REGALREZ 1126", "REGALREZ 1139", and "REGALREZ 3103", sold by Eastman Chemical Co., Middelburg, Netherlands; "PICCOTAC" and EASTOTAC" sold by Eastman Chemical Co.; "ARKON P-140", "ARKON P-125", "ARKON P-115", "ARKON P-100", "ARKON P-90", "ARKON M-135", "ARKON M-115", "ARKON M-100", and "ARKON M-90" sold by Arakawa Chemical Inc., Chicago, IL; and "ESCOREZ 5000 series" sold by Exxon Mobil Corp., Irving, TX. Of particular interest are partially hydrogenated C9 hydrogenated tackifiers, preferably fully hydrogenated C9 hydrogenated tackifiers.

Accordingly, and in one advantageous aspect, the second pressure sensitive adhesive composition for use herein is substantially free of tackifying resins, in particular free of hydrocarbon tackifying resins.

Other additives can be added in order to enhance the performance of the second pressure sensitive adhesive polymeric foam layer. For example, leveling agents, ultraviolet light absorbers, hindered amine light stabilizers (HALS), oxygen inhibitors, wetting agents, rheology modifiers, defoamers, biocides, flame retardants, dyes and the like, can be included herein. All of these additives and the use thereof are well known in the art. It is understood that any of these compounds can be used so long as they do not deleteriously affect the adhesive properties.

In some advantageous aspects, the second pressure sensitive adhesive composition for use herein comprises a filler material, in particular a particulate filler material. Preferably, the optional filler material for use herein is selected from the group of expandable microspheres, glass bubbles, and any combinations thereof.

According to a particularly preferred aspect of the present disclosure, the second pressure sensitive adhesive composition comprises:
a) from 65 to 99 wt%, from 70 to 95 wt%, from 75 to 95 wt%, from 75 to 90 wt%, or even from 75 to 85 wt%, of the first (meth)acrylate copolymer;
b) from 1 to 35 wt%, from 1 to 30 wt%, from 2 to 25 wt%, from 3 to 25 wt%, from 3 to 20 wt%, from 4 to 20 wt%, or even from 4 to 15 wt%, of the second (meth)acrylate copolymer; and
c) optionally, from 2 wt% to 30 wt%, from 2 wt% to 20 wt%, or even from 2 wt% to 15 wt% of a filler material preferably selected from the group of expandable microspheres and glass bubbles;
wherein the weight percentages are based on the total weight of the second pressure sensitive adhesive composition.

The second pressure sensitive adhesive composition for use herein may be prepared by simple blending of the first and the second (meth)acrylate copolymer components, optionally with the optional ingredients such as e.g. the filler material and the tackififying resin. The copolymers can be blended using several conventional methods, such as e.g. melt blending, solvent blending, or any suitable physical means.

Physical blending devices that provide dispersive mixing, distributive mixing, or a combination of dispersive and distributive mixing are useful in preparing homogenous blends. Both batch and continuous methods of physical blending can be used. Examples of batch methods include BRABENDER (using a BRABENDER PREP CENTER, available from C. W. Brabender Instruments, Inc.; South Hackensack, N.J.) or BANBURY internal mixing and roll milling (using equipment available from FARREL COMPANY; Ansonia, Conn.). Examples of continuous methods include single screw extruding, twin screw extruding, disk extruding, reciprocating single screw extruding, and pin barrel single screw extruding. The continuous methods can include utilizing both distributive elements, such as cavity transfer elements (e.g., CTM, available from RAPRA Technology, Ltd.; Shrewsbury, England) and pin mixing elements, static mixing elements and dispersive elements (e.g., MADDOCK mixing elements or SAXTON mixing elements as described in "Mixing in Single-Screw Extruders," Mixing in Polymer Processing, edited by Chris Rauwendaal (Marcel Dekker Inc.: New York (1991), pp. 129, 176-177, and 185-186).

According to an alternative aspect, the second pressure sensitive adhesive composition for use herein may be prepared by incorporating the second (meth)acrylate copolymer into a curable precursor composition of the first (meth)acrylate copolymer comprising the main monomer units used to prepare the first (meth)acrylate copolymer, (meth)acrylic acid monomer units, optionally a polymerization initiator, optionally a crosslinker, and optionally a particulate filler material, thereby forming a curable precursor composition of the pressure sensitive composition. The first (meth)acrylate copolymer is therefore formed in a second step, and in-situ after suitable curing of the curable precursor composition of second the pressure sensitive adhesive composition.

In a preferred aspect, the second (meth)acrylate copolymer is diluted into the curable precursor composition of the first (meth)acrylate copolymer and preferably mixed by shaking.

According to particular aspect of the present disclosure, the second pressure sensitive adhesive composition for use herein is obtained or obtainable by a method of manufacturing, wherein the method comprises the steps of:
a) providing the second (meth)acrylate copolymer comprising from 15 to 40 wt% of (meth)acrylic acid monomer units, based on the weight of the second (meth)acrylate copolymer; and
b) incorporating the second (meth)acrylate copolymer into a curable precursor composition comprising the main monomer units used to prepare the first (meth)acrylate copolymer, (meth)acrylic acid monomer units, a polymerization initiator, optionally a crosslinker, and optionally a particulate filler material, thereby forming a curable precursor composition of the pressure sensitive composition; and
c) curing the curable precursor composition of the pressure sensitive composition obtained in step b), preferably with actinic radiation.

According to an advantageous aspect of the method of manufacturing the second pressure sensitive adhesive composition, the second (meth)acrylate copolymer is obtained by free-radical polymerization, in particular by an essentially solventless polymerization method, more in particular by an essentially adiabatic polymerization reaction.

According to still another advantageous aspect of the method of manufacturing the second pressure sensitive adhesive composition, the second (meth)acrylate copolymer is incorporated into the curable precursor composition of the first (meth)acrylate copolymer by dilution, optionally followed by a mixing step.

In still another beneficial aspect, the second (meth)acrylate copolymer of step a) is obtained as a pre-polymer composition having a polymer conversion rate greater than 10%, greater than 15%, greater than 20%, greater than 25%, greater than 30%, greater than 35%, greater than 40%, or even greater than 45%.

In yet another beneficial aspect, the second (meth)acrylate copolymer of step a) is obtained as a pre-polymer composition having a polymer conversion rate comprised between 10 and 60%, between 20 and 55%, between 30 and 50%, or even between 35 and 50%.

According to the present disclosure, the second pressure sensitive adhesive layer as described herein takes the form of a polymeric foam layer.

In the context of the present disclosure, the term "polymeric foam" is meant to designate a material based on a polymer and which material comprises voids, typically in an amount of at least 5% by volume, typically from 10% to 55% by volume or from 10% to 45% by volume.

A polymeric foam layer for use herein has for example a thickness comprised between 100 and 6000 micrometers, between 200 and 4000 micrometers, between 500 and 2000 micrometers, or even between 800 and 1500 micrometers. As will be apparent to those skilled in the art, in the light of the present description, the preferred thickness of the second pressure sensitive adhesive polymeric foam layer will be dependent on the intended application.

A polymeric foam layer typically has a density comprised between 0.45 g/cm³ and 1.5 g/cm³, between 0.45 g/cm³ and 1.10 g/cm³, between 0.50 g/cm³ and 0.95 g/cm³, between 0.60 g/cm³ and 0.95 g/cm³, or even between 0.70 g/cm³ and 0.95 g/cm³. This density is achieved by including voids or cells. Typically, the polymeric foam layer will comprise at least 5% of voids by volume and for example between 15 and 45 %, or between 20% and 45% by volume.

The voids or cells in the polymeric foam layer can be created in any of the known manners described in the art and include the use of a gas or blowing agent and/or including hollow particles into the composition for the polymeric foam layer. For example, according to one method to create a polymeric foam described in US 4,415,615, an acrylic foam can be obtained by the steps of (i) frothing a composition containing the acrylate monomers and optional comonomers, (ii) coating the froth on a backing and (iii) polymerizing the frothed composition. It is also possible to coat the unfrothed composition of the acrylate monomers and optional comonomers to the backing and to then simultaneously foam and polymerize that composition. Frothing of the composition may be accomplished by whipping a gas into the polymerizable composition. Preferred gasses for this purpose are inert gasses such as nitrogen and carbon dioxide, particularly if the polymerization is photoinitiated. Alternatively, the voids may result from the incorporation of hollow fillers, such as hollow polymeric particles, hollow glass microspheres or hollow ceramic microspheres.

In one beneficial aspect of the present disclosure, the second pressure sensitive adhesive polymeric foam layer is obtained by incorporation of hollow particulate filler material, in particular expandable microspheres, glass microspheres and glass bubbles.

In another advantageous aspect, the second pressure sensitive adhesive polymeric foam layer is obtained by frothing techniques, preferably by whipping a gas into the polymerizable second pressure sensitive adhesive composition.

According to still another advantageous aspect, the second pressure sensitive adhesive polymeric foam layer has a thickness comprised between 100 and 6000 micrometers, between 200 and 4000 micrometers, between 300 and 2000 micrometers, between 500 and 2000 micrometers, between 800 and 1500 micrometers, or even between 400 and 1500 micrometers.

According to an advantageous aspect of the present disclosure, the multilayer pressure sensitive adhesive assembly is in the form of a skin/core multilayer pressure sensitive adhesive assembly, wherein the first pressure sensitive adhesive polymeric layer is the skin layer of the multilayer pressure sensitive adhesive assembly, and the second pressure sensitive adhesive polymeric foam layer is the core layer of the multilayer pressure sensitive adhesive assembly.

Multilayer pressure sensitive adhesive assemblies of this type, and in particular dual layer polymeric foam tape assemblies, are particularly advantageous when compared to single-layer pressure sensitive adhesives, in that adhesion (quick adhesion) can be adjusted by the formulation of the second pressure sensitive adhesive layer (also commonly referred to as the skin layer), while other properties/requirements of the overall assembly such as application issues, deforming issues and energy distribution may be addressed by appropriate formulation of the polymeric foam layer (also commonly referred to as the core layer).

According to a further advantageous aspect, the multilayer pressure sensitive adhesive assembly of the present disclosure is in the form of a multilayer pressure sensitive adhesive assembly further comprising a third pressure sensitive adhesive layer thereby forming e.g. a three-layered multilayer pressure sensitive adhesive assembly. Preferably, the third pressure sensitive adhesive layer is adjacent to the second pressure sensitive adhesive polymeric foam layer in the side of the second pressure sensitive adhesive polymeric foam layer which is opposed to the side of the second pressure sensitive adhesive polymeric foam layer adjacent to the first pressure sensitive adhesive polymeric layer. Preferably still, the second pressure sensitive adhesive polymeric foam layer, the first pressure sensitive adhesive polymeric layer and the third pressure sensitive adhesive layer are superimposed.

In a beneficial aspect, the multilayer pressure sensitive adhesive assembly is in the form of a skin/core/skin multilayer pressure sensitive adhesive assembly, wherein the second pressure sensitive adhesive polymeric foam layer is the core layer of the multilayer pressure sensitive adhesive assembly, the first pressure sensitive adhesive layer is the first skin layer of the multilayer pressure sensitive adhesive assembly and the third pressure sensitive adhesive layer is the second skin layer of the multilayer pressure sensitive adhesive assembly.

The third pressure sensitive adhesive layer may have any composition commonly known in the art. As such, the composition of the third pressure sensitive adhesive layer for use in the multilayer pressure sensitive adhesive assemblies of the present disclosure is not particularly limited.

In a particular aspect, the third pressure sensitive adhesive layer comprises a polymer base material selected from the group consisting of polyacrylates, polyurethanes, polyolefins, polyamines, polyamides, polyesters, polyethers, polyisobutylene, polystyrenes, polyvinyls, polyvinylpyrrolidone, natural rubbers, synthetic rubbers, and any combinations, copolymers or mixtures thereof.

In a typical aspect, the third pressure sensitive adhesive layer comprises a polymer base material selected from the group consisting of polyacrylates, polyurethanes, and any combinations, copolymers or mixtures thereof. According to another typical aspect, the third pressure sensitive adhesive layer comprise a polymer base material selected from the group consisting of polyacrylates, and any combinations, copolymers or mixtures thereof.

According to a preferred aspect of the pressure sensitive adhesive assemblies of the present disclosure, the third pressure sensitive adhesive layer comprises a polymer base material selected from the group consisting of polyacrylates whose main monomer component preferably comprises a linear or branched alkyl (meth)acrylate ester, preferably a non-polar linear or branched alkyl (meth)acrylate ester having a linear or branched alkyl group comprising preferably from 1 to 32, from 1 to 20, or even from 1 to 15 carbon atoms.

According to a preferred aspect of the pressure sensitive adhesive assemblies of the present disclosure, the third pressure sensitive adhesive layer comprises a polymer base material selected from the group consisting of polyacrylates whose main monomer component comprises a linear or branched alkyl (meth)acrylate ester selected from the group consisting of methyl (meth)acrylate, ethyl (meth)acrylate, n-propyl (meth)acrylate, isopropyl (meth)acrylate, n-butyl acrylate, isobutyl acrylate, tert-butyl (meth)acrylate, n-pentyl (meth)acrylate, iso-pentyl (meth)acrylate, n-hexyl (meth)acrylate, iso-hexyl (meth)acrylate, cyclohexyl (meth)acrylate, phenyl (meth)acrylate, octyl (meth)acrylate, isooctyl (meth)acrylate, 2-octyl(meth)acrylate, 2-ethylhexyl (meth)acrylate, decyl (meth)acrylate, undecyl (meth)acrylate, lauryl (meth)acrylate, tridecyl (meth)acrylate, tetradecyl (meth)acrylate, pentadecyl (meth)acrylate, hexadecyl (meth)acrylate, heptadecyl (meth)acrylate, 2-propylheptyl (meth)acrylate, stearyl (meth)acrylate, isobornyl (meth)acrylate, benzyl (meth)acrylate, nonyl (meth)acrylate, isophoryl (meth)acrylate, and any combinations or mixtures thereof.

In a more preferred aspect, the linear or branched alkyl (meth)acrylate ester is selected from the group consisting of isooctyl (meth)acrylate, 2-ethylhexyl (meth)acrylate, 2-propylheptyl (meth)acrylate, butyl acrylate, 2-octyl (meth)acrylate, and any combinations or mixtures thereof; more preferably from the group consisting of isooctyl acrylate, 2-octyl (meth)acrylate, 2-ethylhexyl (meth)acrylate and 2-propylheptyl (meth)acrylate, and any combinations or mixtures thereof; even more preferably from the group consisting of isooctyl acrylate, 2-ethylhexyl acrylate, 2-propylheptyl acrylate, and any combinations or mixtures thereof.

According to an alternative aspect of the multilayer pressure sensitive adhesive assembly of the present disclosure, the third pressure sensitive adhesive layer has a (co)polymeric composition identical or similar to the composition described above for the first pressure sensitive adhesive polymeric layer.

According to a particular aspect of the pressure sensitive adhesive assemblies of the present disclosure, the third pressure sensitive adhesive layer comprises a polymer base material further comprising a polar comonomer, preferably a polar acrylate comonomer. Preferably, the polar comonomer is selected from the group consisting of acrylic acid; methacrylic acid; itaconic acid; hydroxyalkyl acrylates; nitrogen-containing acrylate monomers, in particular acrylamides and substituted acrylamides, acrylamines and substituted acrylamines; and any combinations or mixtures thereof.

In an advantageous aspect of the pressure sensitive adhesive assemblies of the present disclosure, the third pressure sensitive adhesive layer comprises a polymer base material which further comprises a second monomer having an ethylenically unsaturated group, preferably a second non-polar monomer having an ethylenically unsaturated group. Advantageously, the second monomer having an ethylenically unsaturated group for use herein is selected from the group consisting of isobornyl (meth)acrylate, cyclohexyl (meth)acrylate, isophoryl (meth)acrylate, cyclohexyl (meth)acrylate, and any combinations or mixtures thereof; more preferably, the second monomer is selected to be isobornyl (meth)acrylate.

According to one exemplary aspect of the pressure sensitive adhesive assemblies of the present disclosure, the third pressure sensitive adhesive layer comprises a tackifying resin, in particular a hydrocarbon tackifying resin. Advantageously, the tackifying resin is selected from the group consisting of C5-based hydrocarbon resins, C9-based hydrocarbon resins, C5/C9-based hydrocarbon resins, and any combinations or mixtures or hydrogenated versions thereof.

According to an advantageous aspect of the pressure sensitive assembly of the present disclosure, the polymerizable material used to produce the third pressure sensitive adhesive layer, comprises:
a) from 50 to 99.5 weight percent, or from 60 to 95 weight percent, of a linear or branched alkyl (meth)acrylate ester as first/main monomer, wherein the main monomer is preferably selected from the group consisting of iso-octyl (meth)acrylate, 2-ethylhexyl (meth)acrylate, 2-propylheptyl (meth)acrylate, butyl acrylate; optionally
b) from 1.0 to 50 weight percent, from 3.0 to 40 weight percent, from 5.0 to 35 weight percent, or even from 10 to 30 weight percent, of the second monomer having an ethylenically unsaturated group, preferably a second non-polar monomer having an ethylenically unsaturated group; optionally
c) from 0.1 to 15 weight percent, from 0.5 to 15 weight percent, from 1.0 to 10 weight percent, from 2.0 to 8.0 weight percent, from 2.5 to 6.0 weight percent, or even from 3.0 to 6.0 weight percent of a polar monomer, preferably a polar acrylate; and optionally
d) a tackifying resin,
wherein the weight percentages are based on the total weight of polymerizable material used to produce the third pressure sensitive adhesive layer.

According to an advantageous aspect of the pressure sensitive adhesive assemblies of the present disclosure, the third pressure sensitive adhesive layer comprises a polymer base material which further comprises a chlorinated polyolefinic (co)polymer. The incorporation of chlorinated polyolefinic (co)polymers in the curable precursor of the third pressure sensitive adhesive layer significantly improves the stability upon heat bond ageing and heat/humidity bond ageing of the resulting pressure sensitive adhesive polymer layer, in particular on low surface energy (LSE) substrates.

Examples of suitable chlorinated polyolefinic (co)polymers for use herein include those sold under the trade designation: "CPO 343-1", sold by Eastman Chemical Co.; "13-LP", "15-LP", "16-LP" and "17-LP" sold by Toyo Kasei Kogyo Co.Ltd; "Hypalon™ CP 827B", " Hypalon™ CP 163 " and " Hypalon™ CP 183 " sold by DuPont Co.; and "Tyrin™ CPE 4211P", "Tyrin™ CPE 6323A" and "Tyrin™ CPE 3615P" sold by Dow Chemical Co. In a preferred aspect, "CPO 343-1" is used as chlorinated polyolefinic (co)polymer.

According to a preferred aspect of the present disclosure, the curable precursor of the third pressure sensitive adhesive layer comprises a chlorinated polyolefinic (co)polymer, which is selected from the group consisting of chlorinated polypropylene, chlorinated polyethylene, chlorinated ethylene/vinyl acetate copolymer, and any combinations, mixtures or copolymers thereof. More preferably, the chlorinated polyolefinic (co)polymer is selected from the group of chlorinated polypropylenes.

According to an advantageous aspect, the specific pressure sensitive adhesive assemblies as described above are obtained by a wet-on-wet coating process step. Exemplary "wet-in-wet" production processes for use herein are described in detail in e.g. WO-A1-2011094385 (Hitschmann et al.) or in EP-A1-0259094 (Zimmerman et al.).

In the context of the present invention, it has been found that the pressure sensitive adhesive compositions of the present disclosure, albeit comprising a relatively high overall (meth)acrylic acid concentration, do not lead to (or substantially reduce) the potentially issue of (meth)acrylic acid monomers diffusion to the adjacent layer(s). This unwanted diffusion phenomenon may in particular occur in those multilayer assemblies comprising a layer having a relatively high concentration of (meth)acrylic acid monomer units adjacent to a layer having a relatively low concentration of acrylic acid monomer units, and is typically particularly prone to affect multilayer assemblies obtained by a wet-on-wet coating process step.

According to a typical aspect, the multilayer pressure sensitive adhesive assembly according to the disclosure, has a static shear strength value of more than 2000 min, more than 4000 min, more than 6000 min, more than 8000 min, or even more than 10000 min, when measured at 23°C according to the static shear test method described in the experimental section.

According to another typical aspect, the multilayer pressure sensitive adhesive assembly according to the disclosure, has a static shear strength value of more than 2000 min, more than 4000 min, more than 6000 min, more than 8000 min, or even more than 10000 min, when measured at 90°C according to the static shear test method described in the experimental section.

In still another typical aspect, the multilayer pressure sensitive adhesive assembly according to the disclosure, has a peel strength value of more than 10 N/cm, more than 12 N/cm, more than 15 N/cm, more than 18 N/cm, more than 20 N/cm, more than 22 N/cm, more than 25 N/cm, or even more than more than 27 N/cm, when measured at 23°C according to the peel test method described in the experimental section.

Advantageously, the multilayer pressure sensitive adhesive foam tapes for use herein, exhibit excellent heat bond ageing resistance and/or heat/humidity bond ageing on various challenging-to-bond substrates, particularly LSE and MSE substrates, more particularly, LSE substrates.

According to another aspect, the present disclosure relates to a method of manufacturing a pressure sensitive adhesive assembly as described above, wherein the method comprises the steps of:
a) providing a curable precursor composition of the first pressure sensitive adhesive polymeric layer;
b) providing a curable precursor composition of the second pressure sensitive adhesive polymeric foam layer;
c) optionally providing a curable precursor composition of the third pressure sensitive adhesive polymeric layer; and
d) superimposing the curable precursor composition of the first pressure sensitive adhesive polymeric layer, the curable precursor composition of the second pressure sensitive adhesive polymeric foam layer, and optionally the curable precursor composition of the third pressure sensitive adhesive polymeric layer.

According to a typical aspect of this method, the curable precursor of the first pressure sensitive adhesive polymer layer comprises:
a) 60 parts by weight or greater of a low Tg (meth)acrylate copolymer comprising:
   i. C₁-C₃₂ (meth)acrylic acid ester monomer units;
   ii. from 0.1 to 15 parts by weight of C₂-C₈ hydroxyalkyl (meth)acrylic acid ester monomer units, based on 100 parts by weight of the total monomers of the low Tg (meth)acrylate copolymer;
   iii. optionally, acid functional ethylenically unsaturated monomer units;
   iv. optionally, further non-acid functional, ethylenically unsaturated polar monomer units;
   v. optionally, vinyl monomer units; and
   vi. optionally, multifunctional (meth)acrylate monomer units, and
b) up to 40 parts by weight of a high Tg (meth)acrylate copolymer having a weight average molecular weight (Mw) of above 20,000 Daltons, and comprising:
   i. high Tg (meth)acrylic acid ester monomer units;
   ii. optionally, acid functional ethylenically unsaturated monomer units;
   iii. optionally, low Tg (meth)acrylic acid ester monomer units;
   iv. optionally, non-acid functional, ethylenically unsaturated polar monomer units;
   v. optionally, vinyl monomer units;
   vi. optionally, a chlorinated polyolefinic (co)polymer; and
c) optionally, up to 20 parts by weight of a hydrogenated hydrocarbon tackifier, based on 100 parts by weight of copolymers a) and b).

According to another typical aspect of this method, the step of providing a curable precursor of the second pressure sensitive adhesive polymeric foam layer comprises the steps of:
a) providing the second (meth)acrylate copolymer comprising from 15 to 40 wt% of (meth)acrylic acid monomer units, based on the weight of the second (meth)acrylate copolymer; and
b) incorporating the second (meth)acrylate copolymer into a curable precursor composition comprising the main monomer units used to prepare the first (meth)acrylate copolymer, (meth)acrylic acid monomer units, optionally a polymerization initiator, optionally a crosslinker, and optionally a hollow non-porous particulate filler material, thereby forming a curable precursor composition of the second pressure sensitive composition.

According to an advantageous aspect of this method, the second (meth)acrylate copolymer is obtained by free-radical polymerization, in particular by an essentially solventless polymerization method, more in particular by an essentially adiabatic polymerization reaction.

According to another advantageous aspect of this method, the second (meth)acrylate copolymer of step a) is obtained as a pre-polymer composition having a polymer conversion rate greater than 10%, greater than 15%, greater than 20%, greater than 25%, greater than 30%, greater than 35%, greater than 40%, or even greater than 45%.

According to still another advantageous aspect of this method, the second (meth)acrylate copolymer of step a) is obtained as a pre-polymer composition having a polymer conversion rate comprised between 10 and 60%, between 20 and 55%, between 30 and 50%, or even between 35 and 50%.

According to yet another advantageous aspect, the method comprises the steps of:
a) providing a (liquid) precursor of the first pressure sensitive adhesive polymeric layer; and
b) providing a (liquid) precursor of the second pressure sensitive adhesive polymeric foam layer;
c) optionally, providing a (liquid) precursor of the third pressure sensitive adhesive layer;
d) superimposing the (liquid) precursor of the first pressure sensitive adhesive polymeric layer, the (liquid) precursor of the second pressure sensitive adhesive polymeric foam layer, and optionally the (liquid) precursor of the third pressure sensitive adhesive layer, thereby forming a curable precursor of the pressure sensitive adhesive assembly; and
e) curing the curable precursor of the pressure sensitive adhesive assembly obtained in step d), preferably with actinic radiation.

In some advantageous aspects of the method for manufacturing a multilayer pressure sensitive adhesive assembly, a (lower) layer of a curable (liquid) precursor of the second pressure sensitive adhesive polymeric foam layer is covered by an adjacent (upper) layer of a curable liquid precursor of the first pressure sensitive adhesive polymeric layer, respectively, essentially without exposing the (lower) layer of a curable (liquid) precursor of the second pressure sensitive adhesive polymeric foam layer.

According to a beneficial aspect of the method for manufacturing a multilayer pressure sensitive adhesive assembly, the method comprises a wet-on-wet coating process step.

In one exemplary aspect, the method according to the present disclosure is a continuous and self-metered method for manufacturing a multilayer pressure sensitive adhesive assembly. According to this aspect, the method for manufacturing a multilayer pressure sensitive adhesive assembly may optionally comprise the steps of:
f) providing two or more coating knives which are offset, independently from each other, from the substrate to form a gap normal to the surface of the substrate;
g) moving the substrate relative to the coating knives in a downstream direction;
h) providing a curable (liquid) precursor of the first pressure sensitive adhesive polymeric layer, a curable (liquid) precursor of the second pressure sensitive adhesive polymeric foam layer, optionally a curable (liquid) precursor of the third pressure sensitive adhesive layer, to the upstream side of the coating knives thereby coating the two or more curable liquid precursors through the respective gaps as superimposed layers onto the substrate.

Practicing the continuous and self-metered method for manufacturing a multilayer pressure sensitive adhesive assembly as above-described is well within the capabilities of the person skilled in the art, in the light of the present disclosure together with the disclosure of WO-A1-2011094385 (Hitschmann et al.), the content of which is incorporated herewith by reference. In particular, suitable settings and configurations for the coating apparatus, coating knives and coating stations, for use in this particular aspect of the method for manufacturing a multilayer pressure sensitive adhesive assembly, will be easily identified by those skilled in the art, in the light of the present disclosure together with the disclosure of WO-A1-2011094385 (Hitschmann et al.).

According to an alternative aspect of the present disclosure, the method for manufacturing a multilayer pressure sensitive adhesive assembly comprises a (co)extrusion processing step.

According to another alternative aspect of the method for manufacturing a multilayer pressure sensitive adhesive assembly, the first pressure sensitive adhesive polymeric layer, the second pressure sensitive adhesive polymeric foam layer, and optionally the third pressure sensitive adhesive layer, are prepared separately and subsequently laminated to each other.

As already indicated, the multilayer pressure sensitive adhesive assembly of the present disclosure provides excellent adhesion and outstanding cohesion properties to various difficult-to-bond substrates, such as in particular LSE and MSE substrates, even under high stress conditions such as e.g. exposure to intense weathering conditions or under intensive usage.

The multilayer pressure sensitive adhesive assemblies of the present disclosure are outstandingly suitable for outdoor applications, in particular for adhering a first part to a second part, wherein the first part and the second part are used for exterior applications and comprise a thermoplastic or a thermosetting organic polymer (sometimes referred to as exterior parts). As such, the pressure sensitive adhesive assemblies of the present disclosure are particularly suited for outdoor applications in transportation market applications, in particular automotive and aerospace applications, and in construction market applications.

In the context of the present disclosure, it has been surprisingly found that a multilayer pressure sensitive assembly as described herein provides efficient bonding performance and resistance against high mechanical and/or chemical stress conditions such as exposure to intense wind or rain, which may typically occur in transportation and construction market applications. The multilayer pressure sensitive adhesive assemblies of the disclosure are particularly suited for automotive applications, in particular for bonding exterior car parts, which are typically subjected to high stress due in particular to exposure to intense headwind and/or tailwind (especially at high speed), in particular frontal headwind. Conventional exterior car parts are typically made of thermoplastic or thermosetting organic polymers, and may be subjected to premature debonding when exposed to high mechanical stress, in particular upon exposure to intense headwind and/or tailwind, in particular frontal headwind. The multilayer pressure sensitive adhesive assemblies as described herein are particularly suited for bonding exterior car parts to other exterior car parts or car body parts provided with an automotive clear coat.

Accordingly, and in another aspect, the present disclosure relates to a method of adhering a first part to a second part, wherein the first part and the second part comprise a thermoplastic or a thermosetting organic polymer, and wherein the method comprises the steps of:
a) providing a multilayer pressure sensitive adhesive assembly as described above, and comprising:
   i. a second pressure sensitive adhesive polymeric foam layer comprising two major surfaces;
   ii. a first pressure sensitive adhesive polymeric layer adjacent to one major surface of the polymeric foam layer;
   iii. optionally, a third pressure sensitive adhesive layer adjacent to the second pressure sensitive adhesive polymeric foam layer on the major surface which is opposed to the major surface or the second pressure sensitive adhesive polymeric foam layer adjacent to the first pressure sensitive adhesive polymeric layer, and wherein the first pressure sensitive adhesive polymeric layer, the the second pressure sensitive adhesive polymeric foam layer and the optional third pressure sensitive adhesive layer are superimposed;
b) adhering the first pressure sensitive adhesive polymeric layer to the first part; and
c) adhering the second part to the second pressure sensitive adhesive polymeric foam layer or the optional third pressure sensitive adhesive layer.

In a typical aspect of this method, the first part and the second part for use herein comprise a thermoplastic or a thermosetting organic polymer and are advantageously meant to be used for outdoor applications. Parts for use herein may be easily identified by those skilled in the art in the light of the present disclosure, and are not particularly limited.

Typical parts for use herein include, but are not limited to, those used for exterior applications selected from the group of automotive, construction, traffic signage, and graphic signage applications.

Exemplary first part and second parts for use herein are independently selected from the group consisting of cladding, exterior trims, pillar trims, emblems, rear mirror assemblies, spoilers, front spoiler lips, grip molding for trunk lids, hood extensions, wheel arches, body side molding and inlays, tail light assemblies, sonar brackets, license plate brackets, fenders, fender modules, front grilles, headlight cleaning brackets, antennas, roof ditch moldings, roof railings, sunroof frames, front screen moldings, rear screen moldings, side wind visors, automotive body parts, architectural panels, structural glazing, traffic signs, informative and advertising panels, reflectors and linear delineation systems (LDS), raised pavement markers, platforms or display supports bearing visually observable information, and combinations thereof.

According to a particular aspect of this method, the first part and the second part are used for automotive exterior applications, and are independently selected from the group consisting of, cladding, exterior trims, pillar trims, emblems, rear mirror assemblies, spoilers, front spoiler lips, grip molding for trunk lids, hood extensions, wheel arches, body side molding and inlays, tail light assemblies, sonar brackets, license plate brackets, fenders, fender modules, front grilles, headlight cleaning brackets, antennas, roof ditch moldings, roof railings, sunroof frames, front screen moldings, rear screen moldings, side wind visors, automotive body parts, in particular door, roof, hood, trunk lid, bumper, side panels and any combinations thereof.

According to another particular aspect of this method, the first parts and the second parts for use herein are used for exterior construction applications, and are independently selected from the group consisting of architectural panels, structural glazing, and combinations thereof.

According to still another particular aspect of this method, the first parts and the second parts for use herein are used for exterior traffic signage and graphic signage applications, and are independently selected from the group consisting of traffic signs, informative and advertising panels, reflectors and linear delineation systems (LDS), raised pavement markers, platforms or display supports bearing visually observable information, and combinations thereof.

The first parts and the second parts for use herein advantageously comprise a thermoplastic or a thermosetting organic polymer. Thermoplastic and thermosetting organic polymers for use herein may be easily identified by those skilled in the art in the light of the present disclosure, and are not particularly limited.

Exemplary thermoplastic and thermosetting organic polymers for use herein include, but are not limited to, those selected from the group consisting of polyolefins; in particular polypropylene (PP), polyethylene (PE), high density polyethylene (HDPE); blends of polypropylene, in particular polypropylene/ ethylene propylene diene rubber (EPDM), thermoplastic polyolefins (TPO); thermoplastic elastomers (TPE); polyamides (PA), in particular polyamide 6 (PA6); acrylonitrile butadiene styrene (ABS); polycarbonates (PC); PC/ABS blends; polyvinylchlorides (PVC); polyurethanes (PU); polyacetals, in particular polyoxymethylene (POM); polystyrenes (PS); polyacrylates, in particular poly(methyl methacrylate) (PMMA); polyesters, in particular polyethylene terephthalate (PET); clear coat surfaces, in particular clear coats for vehicles like a car or coated surfaces for industrial applications; and any combinations or mixtures thereof.

In a particular aspect, the thermoplastic and thermosetting organic polymers for use herein are selected from the group consisting of polyolefins; in particular polypropylene (PP), polyethylene (PE), high density polyethylene (HDPE); blends of polypropylene, in particular polypropylene/ ethylene propylene diene rubber (EPDM), thermoplastic polyolefins (TPO); thermoplastic elastomers (TPE); and any combinations or mixtures thereof. More particularly, the thermoplastic and thermosetting organic polymers for use herein are selected from the group consisting of polypropylene (PP), polyethylene (PE), thermoplastic polyolefins (TPO); thermoplastic elastomers (TPE); and any combinations or mixtures thereof.

In another particular aspect, the thermoplastic and thermosetting organic polymers for use herein are selected from the group consisting of polyamides (PA), in particular polyamide 6 (PA6); acrylonitrile butadiene styrene (ABS); polycarbonates (PC); PC/ABS blends; polyvinylchlorides (PVC); polyurethanes (PU); polyacetals, in particular polyoxymethylene (POM); polystyrenes (PS); polyacrylates, in particular poly(methyl methacrylate) (PMMA); polyesters, in particular polyethylene terephthalate (PET); clear coat surfaces, in particular clear coats for vehicles like a car or coated surfaces for industrial applications; and any combinations or mixtures thereof. More particularly, the thermoplastic and thermosetting organic polymers for use herein are selected from the group consisting of acrylonitrile butadiene styrene (ABS); polycarbonates (PC); clear coat surfaces, in particular clear coats for vehicles; and any combinations or mixtures thereof.

According to a particular aspect of the present disclosure, the first part for use herein comprises a thermoplastic or a thermosetting organic polymer selected from the group consisting of polyolefins; in particular polypropylene (PP), polyethylene (PE), high density polyethylene (HDPE); blends of polypropylene, in particular polypropylene/ ethylene propylene diene rubber (EPDM), thermoplastic polyolefins (TPO); thermoplastic elastomers (TPE); and any combinations or mixtures thereof.

According to another particular aspect of the present disclosure, the second part for use herein comprises a thermoplastic or a thermosetting organic polymer selected from the group consisting of polyamides (PA), in particular polyamide 6 (PA6); acrylonitrile butadiene styrene (ABS); polycarbonates (PC); PC/ABS blends; polyvinylchlorides (PVC); polyurethanes (PU); polyacetals, in particular polyoxymethylene (POM); polystyrenes (PS); polyacrylates, in particular poly(methyl methacrylate) (PMMA); polyesters, in particular polyethylene terephthalate (PET); clear coat surfaces, in particular clear coats for vehicles like a car or coated surfaces for industrial applications; and any combinations or mixtures thereof.

According to still another particular aspect of the present disclosure, the second part comprises a thermoplastic or a thermosetting organic polymer material selected from clear coat surfaces, in particular clear coats for vehicles, and the second part is preferably selected from the group consisting of automotive body parts, in particular door, roof, hood, trunk lid, bumper, side panels, and any combinations thereof.

According to yet another particular aspect of the present disclosure, the first part is selected from the group consisting of cladding, exterior trims, pillar trims, emblems, rear mirror assemblies, spoilers, front spoiler lips, grip molding for trunk lids, hood extensions, wheel arches, body side molding and inlays, tail light assemblies, sonar brackets, license plate brackets, fenders, fender modules, front grilles, headlight cleaning brackets, antennas, roof ditch moldings, roof railings, sunroof frames, front screen moldings, rear screen moldings, side wind visors, and any combinations thereof.

In a typical aspect of the present disclosure, the first parts and the second parts for use herein are exposed to (intense) weathering conditions, in particular wind, rain, and extreme temperatures, such as e.g. high temperatures up to 90°C or low temperatures down to -40°C.

According to a particular aspect of the present disclosure, the first parts and the second parts for use herein are exposed to headwind and/or tailwind, in particular frontal headwind. This particular aspect is in particular applicable for those situations where the first parts and the second parts are used for exterior transportation applications, in particular exterior automotive and aerospace applications, more in particular automotive applications.

In an advantageous aspect of the method of adhering a first part to a second part, the adhering steps b) and/or c) are performed without using an adhesion promoter, in particular a priming composition or a tie layer.

According to another aspect, the present disclosure is directed to a composite assembly comprising:
a) a first part and a second part comprising a thermoplastic or a thermosetting organic polymer; and
b) a multilayer pressure sensitive adhesive assembly as described above, wherein the first pressure sensitive adhesive polymeric layer is adhered to the first part, and the second pressure sensitive adhesive polymeric foam layer or the optional third pressure sensitive adhesive layer is adhered to the second part.

Particular and preferred aspects relating to the first part and the second part, the multilayer pressure sensitive adhesive assembly, the first pressure sensitive adhesive polymeric layer, the second pressure sensitive adhesive polymeric foam layer, and the optional third pressure sensitive adhesive layer for use in the composite assembly of the present disclosure, are identical to those detailed above in the context of describing the method of adhering a first part to a second part.

According to still another aspect, the present disclosure relates to the use of a multilayer pressure sensitive adhesive assembly as describe above for adhering a first part to a second part, wherein the first part and the second part comprise a thermoplastic or a thermosetting organic polymer.

In a particular aspect of this use, the first part and the second part are exposed to weathering conditions, in particular wind, rain, and extreme temperatures, and are advantageously used for outdoor applications. In a more particular aspect, the first part and the second part are exposed to headwind and/or tailwind, in particular frontal headwind.

According to an exemplary aspect, the first part and the second part are exposed to temperatures above 50°C, above 70°C, above 90°C, or even above 100°C. According to another exemplary aspect, the first part and the second part are exposed to temperatures below 0°C, below -10°C, below -20°C, below -30°C, or even below -40°C.

In another aspect, the present disclosure relates to the use of a multilayer pressure sensitive adhesive assembly as described above for the bonding to a low surface energy substrate or a medium surface energy substrate.

In still another aspect, the present disclosure is directed to the use a multilayer pressure sensitive assembly as described above for industrial applications, in particular for automotive applications.

### EXAMPLES

The present disclosure is further illustrated by the following examples. These examples are merely for illustrative purposes only and are not meant to be limiting on the scope of the appended claims.

### Test Methods applied:

### 90°-Peel-test at 300 mm/min (according to Test Method, Finat No. 2, 8^{th} edition 2009)

Multilayer pressure sensitive adhesive assembly strips according to the present disclosure and having a width of 12.7 mm and a length > 120 mm are cut out in the machine direction from the sample material. For test sample preparation the liner is first removed from the one adhesive side and placed on an aluminum strip having the following dimension 22 x 1.6 cm, 0.13 mm thickness. Then, the adhesive coated side of each PSA assembly strip is placed, after the liner is removed, with its adhesive side down on a clean test panel using light finger pressure. Next, the test samples are rolled twice in each direction with a standard FINAT test roller (weight 6.8 kg) at a speed of approximately 10 mm per second to obtain intimate contact between the adhesive mass and the surface. After applying the pressure sensitive adhesive assembly strips to the test panel, the test samples are allowed to dwell at ambient room temperature (23°C +/- 2°C, 50% relative humidity +/-5%) prior to testing.

For peel testing the test samples are in a first step clamped in the lower movable jaw of a Zwick tensile tester (Model Z005 commercially available from Zwick/Roell GmbH, Ulm, Germany). The multilayer pressure sensitive adhesive film strips are folded back at an angle of 90° and their free ends grasped in the upper jaw of the tensile tester in a configuration commonly utilized for 90° measurements. The tensile tester is set at 300 mm per minute jaw separation rate. Test results are expressed in Newton per 10 mm (N/10 mm). The quoted peel values are the average of two 90°-peel measurements.

The 90° peel testing after heat ageing is tested as follows:
First, the samples are prepared as previously described with an aluminum backing and applied onto the test substrates. After storage of the samples in a constant climate room for 1 hour at room temperature (at 23 +/- 2 °C and 50% relative humidity +/-5%), the test panels are placed in an oven at 90°C for 3 days. After oven aging, the test panels are reconditioned in a constant climate room for 24 hours and the 90° peel forces are measured as described above.

### Static Shear-Test (according to FINAT TM 8, 8^{th} edition 2009)

The test is carried out at ambient room temperature (23 °C +/- 2°C and 50% +/- 5% relative humidity). Each test specimen is cut out having a dimension of 12.7 mm by 25.4 mm. The liner is then removed from one side of the test specimen and the adhesive is adhered onto to an aluminum strip having the following dimension 11 x 1.6 cm, 0.13 mm thickness and comprising a hole for the weight. The second liner is thereafter removed from the test specimen and the small panel with the test specimen is applied onto the respective test panel (PP) having the following dimensions: 50mm x 100mm x 2mm at the short edge. A 1000g weight is then put onto the sandwich construction for 60 minutes. Each sample is then placed into a vertical shear-stand (+2° disposition) with automatic time logging and a 1000g weight is then hung into the hole of the aluminum stripe. The time until failure is measured and recorded in minutes. Target value is 10.000 minutes. Per test specimen three samples are measured.

### Static shear test at 90 °C with 250 g (FINAT Test Method No. 8, 8^{th} edition 2009)

The static shear is a measure of the cohesiveness or internal strength of an adhesive. It is measured in units of time (minutes) required to pull a standard area of adhesive sheet material from a stainless steel test panel under stress of a constant, standard load.

A strip of 25 mm wide and 5.1 cm long is cut in machine direction from the cured multilayer pressure sensitive adhesive sample. One release liner is removed from the strip and the PSA assembly is attached through its exposed adhesive surface onto an anodized aluminum backing. Then, the second release liner is removed and the PSA assembly is attached to the test substrate, providing a bond area of 25 x 10 mm and using light finger pressure. The standard FINAT test roller (6.8 kg) is rolled one time in each direction at a speed of approximately 10 mm per second to obtain intimate contact between the adhesive mass and the substrate surface. After applying the multilayer PSA assembly strip to the test plate, the test plate is left at room temperature for a period of 24 h before testing. A loop is prepared at the end of the test strip in order to hold the specified weight. The test panel is placed in a shear holding device. After a 15 min dwell time at the test temperature of 90°C, the 500 g load is attached in the loop. The timer is started. The results are recorded in minutes and are the average of three shear measurements. A recorded time of "10000+" indicates that the adhesive did not fail after 10000 min.

### Molecular Weight measurement

The weight average molecular weight of the polymers is determined using conventional gel permeation chromatography (GPC). The GPC apparatus obtained from Waters, include a high-pressure liquid chromatography pump (Model 600E), an auto-sampler (Model 712 WISP), and a refractive index detector (Model 2414). The chromatograph is equipped with three Mixed Bed type B (10µm particle) columns 300 x 7.5 mm from Agilent.

Polymeric solutions for testing are prepared by dissolving a polymer in 1ml tetrahydrofuran at a concentration of 0.3% polymer by weight. 300 µl etheral alcoholic diazomethane solution (0.4 mol/1) is added and the sample is kept for 60 minutes at room temperature. The sample is then blown to dryness under a stream of nitrogen at room temperature. The dried sample is dissolved in THF, containing 0.1% toluene, to yield a 0.1% w/v solution. The solution is then filtered through a 0.45 micron polytetrafluoroethylene filter. 100 µl of the resulting solution is injected into the GPC and eluted at a rate of 1.00 milliliter per minute through the columns maintained at 40°C. Toluene is used as a flow rate marker. The system is calibrated with polystyrene standards (10 standards, divided in 3 solutions in the range between 470 Da and 7300000 Da) using a 3rd order regression analysis to establish a calibration curve. The weight average molecular weight (Mw) is calculated for each sample from the calibration curve.

### Test Substrates used for testing:

The pressure sensitive adhesive compositions and assemblies according to the present disclosure are tested for their adhesive properties on following substrates:
- Steel: Stainless Steel (SS) plate ("Edelstahl 1.4301 HID", 150 mm x 50 mm x 2 mm), available from Rocholl GmbH, Aglatershausen, Germany. Prior to testing, the substrates are first cleaned with MEK and n-heptane, dried with a tissue, and then cleaned with MEK and dried with a tissue.
- TMAC9000 automotive clearcoat coated panels available from BASF coatings. Before testing, the clear coat coated panels are cleaned either with a 1:1 mixture of isopropylalcohol and distilled water or with n-heptane. Test panels are then rubbed dry with a paper tissue.

### Raw materials used:

In the examples, the following raw materials and commercial adhesive tapes used are used:
**2-Ethylhexylacrylate** (2-EHA, C8-acrylate) is an ester of 2-ethylalcohol and acrylic acid which is obtained from BASF AG, Germany.
**Acrylic acid** (AA) is obtained from BASF AG, Germany.
**Hydroxy propyl methacrylate** (HPMA) is obtained from Evonik Industries AG, Germany.
**Hydroxy butyl acrylate** (4-HBA) is obtained from BASF AG, Germany.
**Isobornylacrylate** (SR 506D) is a monofunctional acrylic monomer available from Cray Valley, France.
**Isooctyl thioglycolate** (IOTG) is a chain transfer agent and commercially available by Bruno Bock Chemische Fabrik, Germany.
**Vazo 52** (2,2'-Azobis(2,4 dimethylpentanenitrile)) is a thermal polymerization-initiator and is available from Dupont.
**Omnirad BDK** (2,2-dimethoxy-2-phenylacetophenone) is a UV-initiator and is available from iGm resins, Waalwijk Netherlands.
**1,6-Hexanedioldiacrylate** (HDDA) is a fast curing diacrylate and is obtained from BASF AG, Germany.
**HTGO** is a high Tg acrylic oligomer having a M_{w} of 25.000 g/mol, used as 50wt% dilution in 2-PHA) and prepared according to the procedure described in EP-A1-2803712 (Wieneke et al.) for the copolymer referred to as HTG-1d.
**Regalrez 1126** is a low molecular weight, fully hydrogenated pure monomer C9 resin, commercially available from Eastman Chemical BV, NL.
**3M Glass Bubbles (sK15)**, silane-treated hollow glass bubbles with a diameter of 115 micrometers, commercially available by 3M Deutschland GmbH, Germany.
**Aerosil R-972** are hydrophobic fumed silica particles, available from Evonik, Germany.

### Preparation of the second (meth)acrylate copolymer:

Before preparing the precursors used for the pressure sensitive adhesive compositions and the second pressure sensitive adhesive polymeric foam layer, the second (meth)acrylate copolymer, hereinafter referred to as Polymer 1 and having the composition as shown in Table 1, is prepared as detailed below.

**Table 1**

| **Polymer 1** | **Amount** |
|---|---|
| 2-Ethylhexylacrylate (2-EHA) | 80 wt% |
| Acrylic acid (AA) | 20 wt% |
| Isooctyl thioglycolate (IOTG) | 0.04 wt% |
| Vazo 52 | 3 (ppm) |

The polymerization of various monomers as above described for the preparation of the second (meth)acrylate copolymer is carried out using a 1 liter Büchi Polyclave stainless steel reactor (available from Büchi Labortechnik GmbH, The Netherlands).

In a first step, the Büchi reactor is charged with 250 grams of a mixture consisting of the monomer mixture and amounts shown in Table 1, along with 3 ppm of Vazo 52. The reactor is sealed and purged of oxygen and then held at approximately 1 bar nitrogen pressure. The reaction mixture is heated to 60°C and the reaction proceeds adiabatically. The reaction peak temperature is approximately 110°C. When the reaction is complete, the mixture is cooled to below 50°C. The polymerization conversation is approximately around 35%, and the content of acrylic acid monomer units in the second (meth)acrylate copolymer (Polymer 1) is approximately 20%.

### Preparation of the precursors of the second pressure sensitive adhesive polymeric foam layer (foam layer):

The precursor of the second pressure sensitive adhesive composition and the corresponding second pressure sensitive adhesive polymeric foam layer (foam layer), hereinafter referred to as FL 1, is prepared by first diluting the second (meth)acrylate copolymer as above-described in a polymerization precursor composition comprising the C8 acrylate (2-EHA) and the acrylic acid. All the time, the resulting composition is mixed by shaking it with a rolling bench (Model LD 209, available from Labortechnik Frobel, Germany) propeller stirrer (150 U/min) for 24 hours, and the mixing is stopped when a clear homogeneous mixture is obtained. Then, the photoinitiator Omnirad BDK, the HDDA crosslinker, and the fumed silica particles are added and again mixed by shaking for 24 hours. In a third step, the glass bubbles are added and the mixture is stirred with a propeller stirrer (300 U/min) for 5 minutes until they have dispersed. The exact formulation of the polymerization precursor composition for the second pressure sensitive adhesive polymeric foam layer is listed in Table 2 below. The corresponding first (meth)acrylate copolymer is formed *in-situ* in presence of the second (meth)acrylate copolymer.

**Table 2**

| | 2-EHA | AA | Polymer 1 | HDDA | Omnirad BDK | Aerosil | GB sK15 |
|---|---|---|---|---|---|---|---|
| FL 1 | 97 | 3 | 7 | 0.1 | 0.2 | 2 | 12 |

### Preparation of the precursors of the first pressure sensitive adhesive layers SL 1-8 and comparative pressure sensitive adhesive layer CSL 1 (skin layers):

The precursors of the first pressure sensitive adhesive layers (skin layers), hereinafter referred to as SL 1-8, are prepared by combining the C8 acrylate (2-EHA) and the acrylic acid with 0.04 pph of Omnirad as a photoinitiator in a glass vessel. Before the UV exposure is initiated, the mixture is flushed 10 minutes with nitrogen and nitrogen is also bubbled into the mixture the whole time until the polymerization process is stopped by adding air to the syrup. All the time, the mixture is stirred with a propeller stirrer (300 U/min) and the reaction is stopped when a viscosity comprised between 2000 and 4500 mPas is reached (when measured with a Brookfield viscosimeter, T = 25 °C, spindle 4, 12 rpm). Additionally, the remaining amount of Omnirad BDK, the HDDA crosslinker, the hydroxyalkyl (meth)acrylate, the monomeric IBOA, the HTGO oligomer and the hydrocarbon tackifier are added to the composition and mixed until they have dissolved/dispersed. The HTGO is added as a dilution in 2-EHA. The precursor of the comparative pressure sensitive adhesive layer, hereinafter referred to as CSL 1, is prepared in a similar manner at the exception that the composition does not comprise any hydroxyalkyl (meth)acrylate. The exact formulation of the polymerization precursor composition for the first pressure sensitive adhesive layers SL 1-8 and comparative composition CSL 1 are listed (in pph) in Table 3 below.

**Table 3**

| | SL 1 | SL 2 | SL 3 | SL 4 | SL 5 | SL 6 | SL 7 | SL 8 | CSL 1 |
|---|---|---|---|---|---|---|---|---|---|
| 2-EHA | 84 | 80 | 70 | 80 | 70 | 75 | 75 | 84 | 89 |
| HPMA | - | 4.5 | 9 | - | - | - | 7 | 2.5 | - |
| 4-HBA | 2.5 | - | - | 4.5 | 9 | 7 | - | - | - |
| AA | 2.5 | 2.5 | 2.5 | 2.5 | 2.5 | 2.5 | 2.5 | 2.5 | 2.5 |
| IBOA | 9 | 9 | 9 | 9 | 9 | 9 | 9 | 9 | 9 |
| HTGO | 9 | 9 | 9 | 9 | 9 | 9 | 9 | 9 | 9 |
| HDDA | 0.1 | 0.1 | 0.1 | 0.1 | 0.06 | 0.1 | 0.1 | 0.1 | 0.1 |
| Omnirad BDK | 0.2 | 0.2 | 0.2 | 0.2 | 0.2 | 0.2 | 0.2 | 0.2 | 0.2 |
| Regalrez 1126 | 9 | 9 | 9 | 9 | 9 | 9 | 9 | 9 | 9 |

### Preparation of the multilayer pressure sensitive adhesive assemblies for Ex.1 to Ex.8 and Ex.Cl.

The precursors of the pressure sensitive adhesive layer skins SL 1-8, SL C1 and of the second pressure sensitive adhesive polymeric foam core layer FL 1, are superimposed onto each other in a coater, according to the method described in WO-A1-2011094385 (Hitschmann et al.). Hereby, the liquid precursors of the pressure sensitive adhesive skin layers SL 1-8 are coated on the bottom of the pressure sensitive adhesive polymeric foam core layer FL 1. The knife height setting is 130-140 micrometers for the first knife (for the pressure sensitive adhesive skin layers LS 1-8) and 1240-1250 micrometers for the second knife (for the polymeric foam core layer FL 1), both levels calculated from the substrate surface. Curing is accomplished from both top and bottom side in a UV-curing station with a length of 300 cm at the line speed set to 0.82 m/min. The total radiation intensity irradiated cumulatively from top and bottom is approximately 3 mW/cm².

### Examples used for testing

The tested examples are listed in Table 4 below.

**Table 4**

| Example No. | Polymeric foam layer used | Skin layer used |
|---|---|---|
| Ex.1 | LF 1 | SL 1 |
| Ex.2 | LF 1 | SL 2 |
| Ex.3 | LF 1 | SL 3 |
| Ex.4 | LF 1 | SL 4 |
| Ex.5 | LF 1 | SL 5 |
| Ex.6 | LF 1 | SL 6 |
| Ex.7 | LF 1 | SL 7 |
| Ex.8 | LF 1 | SL 8 |
| Ex.C1 | LF 1 | CSL 1 |

### Test Results

### 90°Peel on stainless steel (72h, room temperature)

Table 5 shows the 90° peel values of the multilayer pressure sensitive adhesive assemblies according to Ex.1 to Ex.8 and Ex.C1 after 72h dwell time at room temperature (RT) to TMAC 9000 test substrates.

**Table 5**

| Example No. | Peel value (N/cm) | Failure mode |
|---|---|---|
| Ex.1 | 62 | FS |
| Ex.2 | 58 | FS |
| Ex.3 | 58 | FS |
| Ex.4 | 57 | FS |
| Ex.5 | 57 | FS |
| Ex.6 | 56 | FS |
| Ex.7 | 56 | FS |
| Ex.8 | 52 | FS |
| Ex.C1 | 28 | POP |

FS denotes foam split (cohesive failure); PO denotes pop-off (adhesive failure from test substrate).

Table 5 shows the consistently improved peel adhesion performance obtained with multilayer pressure sensitive adhesive assemblies according to the disclosure (Ex.1 to Ex.8) when compared to a comparative multilayer pressure sensitive adhesive assembly wherein the first pressure sensitive adhesive composition does not comprise any hydroxyalkyl (meth)acrylates.

## Claims

1. A multilayer pressure sensitive adhesive assembly comprising a first pressure sensitive adhesive polymeric layer having a first pressure sensitive adhesive composition adjacent to a second pressure sensitive adhesive polymeric foam layer having a second pressure sensitive adhesive composition, wherein:
(A) the first pressure sensitive adhesive composition comprises:
a) 60 parts by weight or greater of a low Tg (meth)acrylate copolymer having a Tg of below 20°C comprising:
i. C₁-C₃₂ (meth)acrylic acid ester monomer units;
ii. from 0.1 to 15 parts by weight of C₂-C₈ hydroxyalkyl (meth)acrylic acid ester monomer units, based on 100 parts by weight of the total monomers of the low Tg (meth)acrylate copolymer having a Tg of below 20°C;
iii. optionally, acid functional ethylenically unsaturated monomer units;
iv. optionally, further non-acid functional, ethylenically unsaturated polar monomer units;
v. optionally, vinyl monomer units; and
vi. optionally, multifunctional (meth)acrylate monomer units, and
b) up to 40 parts by weight of a high Tg (meth)acrylate copolymer having a Tg of above 50°C and having a weight average molecular weight (Mw) of above 20,000 Daltons, and comprising:
i. high Tg (meth)acrylic acid ester monomer units having a Tg of above 50°C;
ii. optionally, acid functional ethylenically unsaturated monomer units;
iii. optionally, low Tg (meth)acrylic acid ester monomer units having a Tg of below 20°C;
iv. optionally, non-acid functional, ethylenically unsaturated polar monomer units;
v. optionally, vinyl monomer units;
vi. optionally, a chlorinated polyolefinic (co)polymer; and
c) optionally, up to 20 parts by weight of a hydrogenated hydrocarbon tackifier, based on 100 parts by weight of copolymers a) and b); and
(B) the second pressure sensitive adhesive composition comprises:
a) a first (meth)acrylate copolymer comprising from 0.1 to 12 wt% of (meth)acrylic acid monomer units, based on the weight of the first (meth)acrylate copolymer;
b) a second (meth)acrylate copolymer comprising from 15 to 40 wt% of (meth)acrylic acid monomer units, based on the weight of the second (meth)acrylate copolymer; and
c) optionally, a hollow non-porous particulate filler material and wherein the glass transition temperature values are estimated by the Fox equation.

2. A multilayer pressure sensitive adhesive assembly according to claim 1, wherein the low Tg (meth)acrylate copolymer having a Tg of below 20°C comprises from 0.1 to 15 parts by weight, from 0.2 to 15 parts by weight, from 0.2 to 12 parts by weight, from 0.5 to 12 parts by weight, from 0.8 to 12 parts by weight, from 1.0 to 12 parts by weight, from 1.5 to 12 parts by weight, from 1.8 to 12 parts by weight, from 2.0 to 12 parts by weight, from 2.2 to 12 parts by weight, from 2.5 to 12 parts by weight, from 2.5 to 11 parts by weight, from 2.5 to 10 parts by weight, from 2.5 to 10 parts by weight, or even from 2.5 to 8 parts by weight of C₂-C₈ hydroxyalkyl (meth)acrylic acid ester monomer units, based on 100 parts by weight of the total monomers of the low Tg (meth)acrylate copolymer having a Tg of below 20°C.

3. A multilayer pressure sensitive adhesive assembly according to any of claim 1 or 2, wherein the low Tg (meth)acrylate copolymer having a Tg of below 20°C comprises C₂-C₆ hydroxyalkyl (meth)acrylic acid ester monomer units, C₂-C₇ hydroxyalkyl (meth)acrylic acid ester monomer units, C₂-C₆ hydroxyalkyl (meth)acrylic acid ester monomer units, C₂-C₅ hydroxyalkyl (meth)acrylic acid ester monomer units, or even C₂-C₄ hydroxyalkyl (meth)acrylic acid ester monomer units.

4. A multilayer pressure sensitive adhesive assembly according to any of preceding claims, wherein the C₂-C₈ hydroxyalkyl (meth)acrylic acid ester monomer units are selected from the group consisting of 2-hydroxy ethyl (meth)acrylates, 3-hydroxy propyl (meth)acrylates, 4-hydroxy butyl (meth)acrylates, and any mixtures thereof.

5. A multilayer pressure sensitive adhesive assembly according to any of preceding claims, wherein the low Tg (meth)acrylate copolymer having a Tg of below 20°C comprises:
i. from 60 to 99.5 parts by weight, from 65 to 99.5 parts by weight, from 65 to 99.5 parts by weight, from 70 to 99.5 parts by weight, from 75 to 99.5 parts by weight, from 80 to 99.5 parts by weight, from 85 to 99.5 parts by weight, or even from 85 to 98.5 parts by weight of C₁-C₃₂ (meth)acrylic acid ester monomer units, C₁-C₂₄ (meth)acrylic acid ester monomer units, or even C₁-C₁₈ (meth)acrylic acid ester monomer units;
ii. from 0.1 to 15 parts by weight, from 0.2 to 15 parts by weight, from 0.2 to 12 parts by weight, from 0.5 to 12 parts by weight, from 0.8 to 12 parts by weight, from 1.0 to 12 parts by weight, from 1.5 to 12 parts by weight, from 1.8 to 12 parts by weight, from 2.0 to 12 parts by weight, from 2.2 to 12 parts by weight, from 2.5 to 12 parts by weight, from 2.5 to 11 parts by weight, from 2.5 to 10 parts by weight, from 2.5 to 10 parts by weight, or even from 2.5 to 8 parts by weight of C₂-C₈ hydroxyalkyl (meth)acrylic acid ester monomer units,
iii. from 0.5 to 15 parts by weight of acid-functional ethylenically unsaturated monomer units;
iv. from 0 to 20 parts by weight of further non-acid functional, ethylenically unsaturated polar monomer units;
v. from 0 to 5 parts vinyl monomer units; and
vi. from 0 to 5 parts of multifunctional (meth)acrylate monomer units;
based on 100 parts by weight of the total monomers of the low Tg copolymer having a Tg of below 20°C.

6. A multilayer pressure sensitive adhesive assembly according to any of preceding claims, wherein the C₁-C₃₂ (meth)acrylic acid ester monomer units, the C₁-C₂₄ (meth)acrylic acid ester monomer units, or even the C₁-C₁₈ (meth)acrylic acid ester monomer units of the low Tg (meth)acrylate copolymer having a Tg of below 20°C are selected from the group consisting of (meth)acrylic esters of ethanol, 1-propanol, 2-propanol, 1-butanol, 2-butanol, 1-pentanol, 2-pentanol, 3-pentanol, 2-methyl-1-butanol, 3-methyl-1-butanol, 1-hexanol, 2-hexanol, 2-methyl-1-pentanol, 3-methyl-1-pentanol, 2-ethyl-1-butanol, 3,5,5-trimethyl-1-hexanol, 3-heptanol, 1-octanol, 2-octanol, isooctylalcohol, 2-ethyl-1-hexanol, 1-decanol, 2-propylheptanol, 1-dodecanol, 1-tridecanol, 1-tetradecanol, citronellol, dihydrocitronellol, and any combinations or mixtures thereof; more preferably from the group consisting of (meth)acrylic esters of 2-octanol, citronellol, dihydrocitronellol, and any combinations or mixtures thereof.

7. A multilayer pressure sensitive adhesive assembly according to any of preceding claims, wherein the high Tg (meth)acrylate copolymer having a Tg of above 50°C comprises:
i. up to 100 parts by weight of high Tg (meth)acrylic acid ester monomer units having a Tg of above 50°C;
ii. from 0 to 15, or even from 1 to 5 parts by weight of acid functional ethylenically unsaturated monomer units;
iii. from 0 to 50, or even from 1 to 25 parts by weight of optional low Tg (meth)acrylic acid ester monomer units;
iv. from 0 to 10, or even from 1 to 5 parts by weight of optional further non-acid functional, ethylenically unsaturated polar monomer units; and
v. from 0 to 5, or even from 1 to 5 parts by weight of optional vinyl monomer units;
based on 100 parts by weight of the total monomers of the high Tg (meth)acrylate copolymer having a Tg of above 50°C.

8. A multilayer pressure sensitive adhesive assembly according to any of preceding claims, wherein the high Tg (meth)acrylic acid ester monomer units having a Tg of above 50°C are selected from the group consisting of t-butyl (meth)acrylate, methyl (meth)acrylate, ethyl (meth)acrylate, isopropyl (meth)acrylate, n-butyl (meth)acrylate, isobutyl (meth)acrylate, s-butyl (meth)acrylate, t-butyl (meth)acrylate, stearyl (meth)acrylate, phenyl (meth)acrylate, cyclohexyl (meth)acrylate, isobornyl (meth)acrylate, benzyl (meth)acrylate, 3,3,5 trimethylcyclohexyl (meth)acrylate, cyclohexyl (meth)acrylate, N-octyl acrylamide, propyl (meth)acrylate, and any mixtures thereof.

9. A multilayer pressure sensitive adhesive assembly according to any of preceding claims, wherein the low Tg (meth)acrylic acid ester monomer units having a Tg of below 20°C are selected from the group consisting of n-butyl acrylate, isobutyl acrylate, hexyl acrylate, 2-ethyl-hexylacrylate, isooctylacrylate, caprolactoneacrylate, isodecylacrylate, tridecylacrylate, laurylmethacrylate, methoxy-polyethylenglycol-monomethacrylate, laurylacrylate, tetrahydrofurfuryl-acrylate, ethoxy-ethoxyethyl acrylate, ethoxylated-nonylacrylate, and any mixtures thereof.

10. A multilayer pressure sensitive adhesive assembly according to any of preceding claims, wherein:
a) the first (meth)acrylate copolymer comprises from 0.1 to 11 wt%, from 0.1 to 10 wt%, from 0.2 to 10 wt%, from 0.2 to 9 wt%, from 0.2 to 8 wt%, from 0.3 to 8 wt%, from 0.5 to 8 wt%, from 0.5 to 6 wt%, from 1 to 6 wt%, or even from 1 to 5 wt%, of (meth)acrylic acid monomer units, based on the weight of the first (meth)acrylate copolymer; and
b) the second (meth)acrylate copolymer comprises from 16 to 40 wt%, from 16 to 35 wt%, from 16 to 30 wt%, from 16 to 25 wt%, from 17 to 25 wt%, from 17 to 23 wt%, or even from 17 to 20 wt% of (meth)acrylic acid monomer units, based on the weight of the second (meth)acrylate copolymer.

11. A method of adhering a first part to a second part, wherein the first part and the second part comprise a thermoplastic or a thermosetting organic polymer, and wherein the method comprises the steps of:
a) providing a multilayer pressure sensitive adhesive assembly as described in any of claims 1 to 10, and comprising:
i. a second pressure sensitive adhesive polymeric foam layer comprising two major surfaces;
ii. a first pressure sensitive adhesive polymeric layer adjacent to one major surface of the polymeric foam layer;
iii. optionally, a third pressure sensitive adhesive layer adjacent to the second pressure sensitive adhesive polymeric foam layer on the major surface which is opposed to the major surface or the second pressure sensitive adhesive polymeric foam layer adjacent to the first pressure sensitive adhesive polymeric layer, and wherein the first pressure sensitive adhesive polymeric layer, the the second pressure sensitive adhesive polymeric foam layer and the optional third pressure sensitive adhesive layer are superimposed;
b) adhering the first pressure sensitive adhesive polymeric layer to the first part; and
c) adhering the second part to the second pressure sensitive adhesive polymeric foam layer or the optional third pressure sensitive adhesive layer.

12. A method according to claim 11, wherein the first part and the second part are used for automotive exterior applications, and are independently selected from the group consisting of, cladding, exterior trims, pillar trims, emblems, rear mirror assemblies, spoilers, front spoiler lips, grip molding for trunk lids, hood extensions, wheel arches, body side molding and inlays, tail light assemblies, sonar brackets, license plate brackets, fenders, fender modules, front grilles, headlight cleaning brackets, antennas, roof ditch moldings, roof railings, sunroof frames, front screen moldings, rear screen moldings, side wind visors, automotive body parts, in particular door, roof, hood, trunk lid, bumper, side panels and any combinations thereof.

13. A method according to claim 11 or 12, wherein the thermoplastic or thermosetting organic polymer is selected from the group consisting of polyolefins; in particular polypropylene (PP), polyethylene (PE), high density polyethylene (HDPE); blends of polypropylene, in particular polypropylene/ ethylene propylene diene rubber (EPDM), thermoplastic polyolefins (TPO); thermoplastic elastomers (TPE); polyamides (PA), in particular polyamide 6 (PA6); acrylonitrile butadiene styrene (ABS); polycarbonates (PC); PC/ABS blends; polyvinylchlorides (PVC); polyurethanes (PU); polyacetals, in particular polyoxymethylene (POM); polystyrenes (PS); polyacrylates, in particular poly(methyl methacrylate) (PMMA); polyesters, in particular polyethylene terephthalate (PET); clear coat surfaces, in particular clear coats for vehicles like a car or coated surfaces for industrial applications; and any combinations or mixtures thereof.

14. Use of a multilayer pressure sensitive adhesive assembly according to any of claims 1 to 10 for adhering a first part to a second part, wherein the first part and the second part comprise a thermoplastic or a thermosetting organic polymer.

15. Use of a multilayer pressure sensitive adhesive assembly according to any of claims 1 to 10 for the bonding to a low surface energy substrate or a medium surface energy substrate.

## Patentansprüche

1. Eine mehrschichtige Haftkleberanordnung, umfassend eine erste Haftkleberpolymerschicht mit einer ersten Haftkleberzusammensetzung angrenzend eine zweite Haftkleberpolymerschaumschicht mit einer zweiten Haftkleberzusammensetzung, wobei:
(A) die erste Haftkleberzusammensetzung umfasst:
a) 60 Gewichtsteile oder mehr eines (Meth)acrylat-Copolymers niedriger Tg, das eine Tg von unter 20 °C aufweist, umfassend:
i. C₁-C₃₂-(Meth-)acrylsäureester-Monomereinheiten;
ii. von 0,1 bis 15 Gewichtsteile C₂-C₈-Hydroxyalkyl(meth)acrylsäureester-Monomereinheiten bezogen auf 100 Gewichtsteile der Gesamtmonomere des (Meth)acrylat-Copolymers niedriger Tg, das eine Tg von unter 20 °C aufweist;
iii. gegebenenfalls säurefunktionelle ethylenisch ungesättigte Monomereinheiten;
iv. gegebenenfalls weitere nicht säurefunktionelle ethylenisch ungesättigte polare Monomereinheiten;
v. gegebenenfalls Vinyl-Monomereinheiten; und
vi. gegebenenfalls multifunktionelle (Meth)acrylat-Monomereinheiten, und
b) bis zu 40 Gewichtsteile eines (Meth)acrylat-Copolymers hoher Tg, das eine Tg von über 50 °C und ein gewichtsgemitteltes Molekulargewicht (Mw) von über 20.000 Dalton aufweist und Folgendes umfasst:
i. (Meth)acrylsäureester-Monomereinheiten hoher Tg, die eine Tg von über 50 °C aufweisen;
ii. gegebenenfalls säurefunktionelle ethylenisch ungesättigte Monomereinheiten;
iii. gegebenenfalls (Meth)acrylsäureester-Monomereinheiten niedriger Tg, die eine Tg von unter 20 °C aufweisen;
iv. gegebenenfalls nicht säurefunktionelle ethylenisch ungesättigte polare Monomereinheiten;
v. gegebenenfalls Vinyl-Monomereinheiten;
vi. gegebenenfalls ein chloriertes Polyolefin-(Co)polymer; und
c) gegebenenfalls bis zu 20 Gewichtsteile eines hydrierten Kohlenwasserstoff-Klebrigmachers bezogen auf 100 Gewichtsteile der Polymere a) und b); und
(B) die zweite Haftkleberzusammensetzung umfasst:
a) ein erstes (Meth)acrylatcopolymer, umfassend zu 0,1 bis 12 Gew % (Meth)acrylsäuremonomereinheiten, bezogen auf das Gewicht des ersten (Meth)acrylatcopolymers;
b) ein zweites (Meth)acrylat-Copolymer, umfassend zu 15 bis 40 Gew.-% (Meth)acrylsäure-Monomereinheiten bezogen auf das Gewicht des zweiten (Meth)acrylatcopolymers; und
c) gegebenenfalls ein hohles nicht poröses teilchenförmiges Füllstoffmaterial und wobei die Glasübergangstemperaturwerte mittels der Fox-Gleichung geschätzt werden.

2. Eine mehrschichtige Haftkleberanordnung nach Anspruch 1, wobei das (Meth)acrylat-Copolymer niedriger Tg, das eine Tg von unter 20 °C aufweist, von 0,1 bis 15 Gewichtsteile, von 0,2 bis 15 Gewichtsteile, von 0,2 bis 12 Gewichtsteile, von 0,5 bis 12 Gewichtsteile, von 0,8 bis 12 Gewichtsteile, von 1,0 bis 12 Gewichtsteile, von 1,5 bis 12 Gewichtsteile, von 1,8 bis 12 Gewichtsteile, von 2,0 bis 12 Gewichtsteile, von 2,2 bis 12 Gewichtsteile, von 2,5 bis 12 Gewichtsteile, von 2,5 bis 11 Gewichtsteile, von 2,5 bis 10 Gewichtsteile, von 2,5 bis 10 Gewichtsteile oder sogar von 2,5 bis 8 Gewichtsteile C₂-C₈-Hydroxyalkyl(meth)acrylsäureester-Monomereinheiten bezogen auf 100 Gewichtsteile der Gesamtmonomere des (Meth)acrylat-Copolymers niedriger Tg, das eine Tg von unter 20 °C aufweist, umfasst.

3. Eine mehrschichtige Haftkleberanordnung nach einem der Ansprüche 1 oder 2, wobei das (Meth)acrylat-Copolymer niedriger Tg, das eine Tg von unter 20 °C aufweist, C₂-C₆-Hydroxyalkyl(meth)acrylsäureester-Monomereinheiten, C₂-C₇-Hydroxyalkyl(meth)acrylsäureester-Monomereinheiten, C₂-C₆-Hydroxyalkyl(meth)acrylsäureester-Monomereinheiten, C₂-C₅-Hydroxyalkyl(meth)acrylsäureester-Monomereinheiten oder sogar C₂-C₄-Hydroxyalkyl(meth)acrylsäureester-Monomereinheiten umfasst.

4. Eine mehrschichtige Haftkleberanordnung nach einem der vorstehenden Ansprüche, wobei die C₂-C₈-Hydroxyalkyl(meth)acrylsäureester-Monomereinheiten aus der Gruppe bestehend aus 2-Hydroxyethyl(meth)acrylaten, 3-Hydroxypropyl(meth)acrylaten, 4-Hydroxybutyl(meth)acrylaten und Mischungen davon ausgewählt sind.

5. Eine mehrschichtige Haftkleberanordnung nach einem der vorstehenden Ansprüche, wobei das (Meth)acrylat-Copolymer niedriger Tg, das eine Tg von unter 20 °C aufweist, umfasst:
i. von 60 bis 99,5 Gewichtsteile, von 65 bis 99,5 Gewichtsteile, von 65 bis 99,5 Gewichtsteile, von 70 bis 99,5 Gewichtsteile, von 75 bis 99,5 Gewichtsteile, von 80 bis 99,5 Gewichtsteile, von 85 bis 99,5 Gewichtsteile oder sogar von 85 bis 98,5 Gewichtsteile C₁-C₃₂-(Meth)acrylsäureester-Monomereinheiten, C₁-C₂₄-(Meth)acrylsäureester-Monomereinheiten oder sogar C₁-C₁₈-(Meth)acrylsäureester-Monomereinheiten;
ii. von 0,1 bis 15 Gewichtsteile, von 0,2 bis 15 Gewichtsteile, von 0,2 bis 12 Gewichtsteile, von 0,5 bis 12 Gewichtsteile, von 0,8 bis 12 Gewichtsteile, von 1,0 bis 12 Gewichtsteile, von 1,5 bis 12 Gewichtsteile, von 1,8 bis 12 Gewichtsteile, von 2,0 bis 12 Gewichtsteile, von 2,2 bis 12 Gewichtsteile, von 2,5 bis 12 Gewichtsteile, von 2,5 bis 11 Gewichtsteile, von 2,5 bis 10 Gewichtsteile, von 2,5 bis 10 Gewichtsteile oder sogar von 2,5 bis 8 Gewichtsteile C₂-C₈-Hydroxyalkyl(meth)acrylsäureester-Monomereinheiten,
iii. von 0,5 bis 15 Gewichtsteile säurefunktioneller, ethylenisch ungesättigter Monomereinheiten;
iv. von 0 bis 20 Gewichtsteile weiterer nicht säurefunktioneller, ethylenisch ungesättigter polarer Monomereinheiten;
v. von 0 bis 5 Teile Vinyl-Monomereinheiten; und
vi. von 0 bis 5 Teile multifunktioneller (Meth)acrylat-Monomereinheiten; bezogen auf 100 Gewichtsteile der Gesamtmonomere des Copolymers niedriger Tg, das eine Tg von unter 20 °C aufweist.

6. Eine mehrschichtige Haftkleberanordnung nach einem der vorstehenden Ansprüche, wobei die C₁-C₃₂-(Meth)acrylsäureester-Monomereinheiten, die C₁-C₂₄-(Meth)acrylsäureester-Monomereinheiten oder sogar die C₁-C₁₈-(Meth)acrylsäureester-Monomereinheiten des (Meth)acrylat-Copolymers niedriger Tg, das eine Tg von unter 20 °C aufweist, ausgewählt sind aus der Gruppe, bestehend aus (Meth)acrylsäureestern von Ethanol, 1-Propanol, 2-Propanol, 1-Butanol, 2-Butanol, 1-Pentanol, 2-Pentanol, 3-Pentanol, 2-Methyl-1-butanol, 3-Methyl-1-butanol, 1-Hexanol, 2-Hexanol, 2-Methyl-1-pentanol, 3-Methyl-1-pentanol, 2-Ethyl-1-butanol, 3,5,5-Trimethyl-1-hexanol, 3-Heptanol, 1-Octanol, 2-Octanol, Isooctylalkohol, 2-Ethyl-1-hexanol, 1-Decanol, 2-Propylheptanol, 1-Dodecanol, 1-Tridecanol, 1-Tetradecanol, Citronellol, Dihydrocitronellol und Kombinationen oder Mischungen davon; mehr bevorzugt aus der Gruppe, bestehend aus (Meth)acrylsäureestern von 2-Octanol, Citronellol, Dihydrocitronellol und Kombinationen oder Mischungen davon.

7. Eine mehrschichtige Haftkleberanordnung nach einem der vorstehenden Ansprüche, wobei das (Meth)acrylat-Copolymer hoher Tg, das eine Tg von über 50 °C aufweist, umfasst:
i. bis zu 100 Gewichtsteile (Meth)acrylsäureester-Monomereinheiten hoher Tg, die eine Tg von über 50 °C aufweisen;
ii. von 0 bis 15 oder sogar von 1 bis 5 Gewichtsteile säurefunktioneller, ethylenisch ungesättigter Monomereinheiten;
iii. von 0 bis 50 oder sogar von 1 bis 25 Gewichtsteile (Meth)acrylsäureester-Monomereinheiten optional niedriger Tg;
iv. von 0 bis 10 oder sogar von 1 bis 5 Gewichtsteile optionaler weiterer nicht säurefunktioneller, ethylenisch ungesättigter polarer Monomereinheiten; und
v. von 0 bis 5 oder sogar 1 bis 5 Gewichtsteile optionaler Vinyl-Monomereinheiten;
bezogen auf 100 Gewichtsteile der Gesamtmonomere des (Meth)acrylat-Copolymers hoher Tg, das eine Tg von über 50 °C aufweist.

8. Eine mehrschichtige Haftkleberanordnung nach einem der vorstehenden Ansprüche, wobei die (Meth)acrylsäureester-Monomereinheiten hoher Tg, die eine Tg von über 50 °C aufweisen, ausgewählt sind aus der Gruppe, bestehend aus t-Butyl(meth)acrylat, Methyl(meth)acrylat, Ethyl(meth)acrylat, Isopropyl(meth)acrylat, n-Butyl(meth)acrylat, Isobutyl(meth)acrylat, s-Butyl(meth)acrylat, t-Butyl(meth)acrylat, Stearyl(meth)acrylat, Phenyl(meth)acrylat, Cyclohexyl(meth)acrylat, Isobornyl(meth)acrylat, Benzyl(meth)acrylat, 3,3,5-Trimethylcyclohexyl(meth)acrylat, Cyclohexyl(meth)acrylat, N-Octylacrylamid, Propyl(meth)acrylat und Mischungen davon.

9. Eine mehrschichtige Haftkleberanordnung nach einem der vorstehenden Ansprüche, wobei die (Meth)acrylsäureester-Monomereinheiten niedriger Tg, die eine Tg von unter 20 °C aufweisen, ausgewählt sind aus der Gruppe, bestehend aus n-Butylacrylat, Isobutylacrylat, Hexylacrylat, 2-Ethylhexylacrylat, Isooctylacrylat, Caprolactonacrylat, Isodecylacrylat, Tridecylacrylat, Laurylmethacrylat, Methoxypolyethylenglycolmonomethacrylat, Laurylacrylat, Tetrahydrofurfurylacrylat, Ethoxyethoxyethylacrylat, ethoxyliertem Nonylacrylat und Mischungen davon.

10. Eine mehrschichtige Haftkleberanordnung nach einem der vorstehenden Ansprüche, wobei:
a) das erste (Meth)acrylatcopolymer zu 0,1 bis 11 Gew.-%, zu 0,1 bis 10 Gew.-%, zu 0,2 bis 10 Gew.-%, zu 0,2 bis 9 Gew.-%, zu 0,2 bis 8 Gew.-%, zu 0,3 bis 8 Gew.-%, zu 0,5 bis 8 Gew.-%, zu 0,5 bis 6 Gew.-%, zu 1 bis 6 Gew.-% oder sogar zu 1 bis 5 Gew.-% (Meth)acrylsäuremonomereinheiten, bezogen auf das Gewicht des ersten (Meth)acrylatcopolymers, umfasst; und
b) das zweite (Meth)acrylatcopolymer zu 16 bis 40 Gew.-%, zu 16 bis 35 Gew.-%, zu 16 bis 30 Gew.-%, zu 16 bis 25 Gew.-%, zu 17 bis 25 Gew.-%, zu 17 bis 23 Gew.-% oder sogar zu 17 bis 20 Gew.-% (Meth)acrylsäuremonomereinheiten, bezogen auf das Gewicht des zweiten (Meth)acrylatcopolymers, umfasst.

11. Ein Verfahren zum Kleben eines ersten Teils an ein zweites Teil, wobei das erste Teil und das der zweite Teil ein thermoplastisches oder ein wärmehärtbares organisches Polymer umfassen und wobei das Verfahren die folgenden Schritte umfasst:
a) Bereitstellen einer mehrschichtigen Haftkleberanordnung nach einem der Ansprüche 1 bis 10 und umfassend:
i. eine zweite Haftkleberpolymerschaumschicht, die zwei Hauptoberflächen umfasst;
ii. eine erste Haftkleberpolymerschicht, angrenzend an eine Hauptoberfläche der Polymerschaumschicht;
iii. gegebenenfalls eine dritte Haftkleberschicht angrenzend an die zweite Haftkleberpolymerschaumschicht auf der Hauptoberfläche, die der Hauptoberfläche gegenüberliegt oder der zweiten Haftkleberpolymerschaumschicht angrenzend an die erste Haftkleberpolymerschicht, und wobei die erste Haftkleberpolymerschicht, die zweite Haftkleberpolymerschaumschicht und die optionale dritte Haftkleberschicht übereinander angeordnet sind;
b) Kleben der ersten Haftkleberpolymerschicht an das erste Teil; und
c) Kleben des zweiten Teils an die zweite Haftkleberpolymerschaumschicht oder die optionale dritte Haftkleberschicht.

12. Ein Verfahren nach Anspruch 11, wobei das erste Teil und das zweite Teil für Außenanwendungen im Automobilbereich verwendet werden und unabhängig voneinander ausgewählt sind aus der Gruppe, bestehend aus Verkleidung, Außenverkleidungen, Säulenverkleidungen, Emblemen, Rückspiegelanordnungen, Spoilern, Frontspoilerlippen, Griffleisten für Kofferraumdeckel, Motorhaubenverlängerungen, Raddrahtbögen, Karosserieseitenleisten und -einlagen, Rücklichtbaugruppen, Sonarbrackets, Nummernschildbrackets, Kotflügeln, Kotflügelmodulen, Frontgittern, Scheinwerferreinigungsbrackets, Antennen, Dachgrabenformteilen, Dachreeling, Schiebedachrahmen, Frontscheibenformteilen, Heckscheibenformteilen, Seitenwindschutzblenden, Automobilkarosserieteilen, insbesondere Tür, Dach, Motorhaube, Kofferraumdeckel, Stoßstange, Seitenverkleidungen und Kombinationen davon.

13. Ein Verfahren nach Anspruch 11 oder 12, wobei das thermoplastische oder duroplastische organische Polymer ausgewählt ist aus der Gruppe, bestehend aus Polyolefinen; insbesondere Polypropylen (PP), Polyethylen (PE), Polyethylen hoher Dichte (HDPE); Mischungen aus Polypropylen, insbesondere Polypropylen/Ethylen-Propylen-Dien-Kautschuk (EPDM), thermoplastischen Polyolefinen (TPO); thermoplastischen Elastomeren (TPE); Polyamiden (PA), insbesondere Polyamid 6 (PA6); Acrylnitril-Butadien-Styrol (ABS); Polycarbonaten (PC); PC/ABS-Mischungen; Polyvinylchloriden (PVC); Polyurethanen (PU); Polyacetalen, insbesondere Polyoxymethylen (POM); Polystyrolen (PS); Polyacrylaten, insbesondere Poly(methylmethacrylat) (PMMA); Polyestern, insbesondere Polyethylenterephthalat (PET); Klarlackoberflächen, insbesondere Klarlacke für Fahrzeuge, wie ein Auto, oder lackierte Oberflächen für industrielle Anwendungen; und Kombinationen oder Mischungen davon.

14. Verwendung einer mehrschichtigen Haftkleberanordnung nach einem der Ansprüche 1 bis 10 zum Kleben eines ersten Teils an ein zweites Teil, wobei das erste Teil und das zweite Teil ein thermoplastisches oder ein duroplastisches organisches Polymer umfassen.

15. Verwendung einer mehrschichtigen Haftkleberanordnung nach einem der Ansprüche 1 bis 10 zum Bonden an ein Substrat niedriger Oberflächenenergie oder ein Substrat mittlerer Oberflächenenergie.

## Revendications

1. Ensemble adhésif sensible à la pression multicouche comprenant une première couche polymère d'adhésif sensible à la pression ayant une première composition d'adhésif sensible à la pression adjacente à une deuxième couche de mousse polymère d'adhésif sensible à la pression ayant une deuxième composition d'adhésif sensible à la pression, dans lequel :
(A) la première composition d'adhésif sensible à la pression comprend :
a) 60 parties en poids ou plus d'un copolymère de (méth)acrylate à faible Tg ayant une Tg inférieure à 20 °C comprenant :
i. des motifs monomères ester d'acide (méth)acrylique en C₁ à C₃₂ ;
ii. de 0,1 à 15 parties en poids de motifs monomères ester d'acide (méth)acrylique d'hydroxyalkyle en C₂ à C₈, sur la base de 100 parties en poids des monomères totaux du copolymère de (méth)acrylate à faible Tg ayant une Tg inférieure à 20 °C ;
iii. facultativement, des motifs monomères à insaturation éthylénique à fonction acide ;
iv. facultativement, d'autres motifs monomères polaires à insaturation éthylénique sans fonction acide ;
v. facultativement, des motifs monomères vinyliques ; et
vi. facultativement, des motifs monomères (méth)acrylate multifonctionnel, et
b) jusqu'à 40 parties en poids d'un copolymère de (méth)acrylate à Tg élevée ayant une Tg supérieure à 50 °C et ayant une masse moléculaire moyenne en poids (Mw) supérieure à 20 000 Daltons, et comprenant :
i. des motifs monomères ester d'acide (méth)acrylique à Tg élevée ayant une Tg supérieure à 50 °C ;
ii. facultativement, des motifs monomères à insaturation éthylénique à fonction acide ;
iii. facultativement, des motifs monomères ester d'acide (méth)acrylique à faible Tg ayant une Tg inférieure à 20 °C ;
iv. facultativement, des motifs monomères polaires à insaturation éthylénique sans fonction acide ;
v. facultativement, des motifs monomères vinyliques ;
vi. facultativement, un (co)polymère polyoléfinique chloré ; et
c) facultativement, jusqu'à 20 parties en poids d'un agent poisseux hydrocarboné hydrogéné, sur la base de 100 parties en poids de copolymères a) et b) ; et
(B) la deuxième composition d'adhésif sensible à la pression comprend :
a) un premier copolymère de (méth)acrylate comprenant de 0,1 à 12 % en poids de motifs monomères acide (méth)acrylique, sur la base du poids du premier copolymère de (méth)acrylate ;
b) un deuxième copolymère de (méth)acrylate comprenant de 15 à 40 % en poids de motifs monomères acide (méth)acrylique, sur la base du poids du deuxième copolymère de (méth)acrylate ; et
c) facultativement, un matériau de charge particulaire creux non poreux et dans lequel les valeurs de température de transition vitreuse sont estimées par l'équation de Fox.

2. Ensemble adhésif sensible à la pression multicouche selon la revendication 1, dans lequel le copolymère de (méth)acrylate à faible Tg ayant une Tg inférieure à 20 °C comprend de 0,1 à 15 parties en poids, de 0,2 à 15 parties en poids, de 0,2 à 12 parties en poids, de 0,5 à 12 parties en poids, de 0,8 à 12 parties en poids, de 1,0 à 12 parties en poids, de 1,5 à 12 parties en poids, de 1,8 à 12 parties en poids, de 2,0 à 12 parties en poids, de 2,2 à 12 parties en poids, de 2,5 à 12 parties en poids, de 2,5 à 11 parties en poids, de 2,5 à 10 parties en poids, de 2,5 à 10 parties en poids, ou même de 2,5 à 8 parties en poids de motifs monomères ester d'acide (méth)acrylique d'hydroxyalkyle en C₂ à C₈, sur la base de 100 parties en poids des monomères totaux du copolymère de (méth)acrylate à faible Tg ayant une Tg inférieure à 20 °C.

3. Ensemble adhésif sensible à la pression multicouche selon l'une quelconque des revendications 1 ou 2, dans lequel le copolymère de (méth)acrylate à faible Tg ayant une Tg inférieure à 20 °C comprend des motifs monomères ester d'acide (méth)acrylique d'hydroxyalkyle en C₂ à C₆, des motifs monomères ester d'acide (méth)acrylique d'hydroxyalkyle en C₂ à C₇, des motifs monomères ester d'acide (méth)acrylique d'hydroxyalkyle en C₂ à C₆, des motifs monomères ester d'acide (méth)acrylique d'hydroxyalkyle en C₂ à C₅, ou même des motifs monomères ester d'acide (méth)acrylique d'hydroxyalkyle en C₂ à C₄.

4. Ensemble adhésif sensible à la pression multicouche selon l'une quelconque des revendications précédentes, dans lequel les motifs monomères ester d'acide (méth)acrylique d'hydroxyalkyle en C₂ à C₈ sont choisis dans le groupe constitué de (méth)acrylates de 2-hydroxyéthyle, (méth)acrylates de 3-hydroxypropyle, (méth)acrylate de 4-hydroxybutyle, et n'importe quels mélanges de ceux-ci.

5. Ensemble adhésif sensible à la pression multicouche selon l'une quelconque des revendications précédentes, dans lequel le copolymère de (méth)acrylate à faible Tg ayant une Tg inférieure à 20 °C comprend :
i. de 60 à 99,5 parties en poids, de 65 à 99,5 parties en poids, de 65 à 99,5 parties en poids, de 70 à 99,5 parties en poids, de 75 à 99,5 parties en poids, de 80 à 99,5 parties en poids, de 85 à 99,5 parties en poids, ou même de 85 à 98,5 parties en poids de motifs monomères ester d'acide (méth)acrylique en C₁ à C₃₂, de motifs monomères ester d'acide (méth)acrylique en C₁ à C₂₄ ou même de motifs monomères ester d'acide (méth)acrylique en C₁ à C₁₈ ;
ii. de 0,1 à 15 parties en poids, de 0,2 à 15 parties en poids, de 0,2 à 12 parties en poids, de 0,5 à 12 parties en poids, de 0,8 à 12 parties en poids, de 1,0 à 12 parties en poids, de 1,5 à 12 parties en poids, de 1,8 à 12 parties en poids, de 2,0 à 12 parties en poids, de 2,2 à 12 parties en poids, de 2,5 à 12 parties en poids, de 2,5 à 11 parties en poids, de 2,5 à 10 parties en poids, de 2,5 à 10 parties en poids, ou même de 2,5 à 8 parties en poids de motifs monomères ester d'acide (méth)acrylique d'hydroxyalkyle en C₂ à C₈,
iii. de 0,5 à 15 parties en poids de motifs monomères à insaturation éthylénique à fonction acide ;
iv. de 0 à 20 parties en poids d'autres motifs monomères polaires à insaturation éthylénique sans fonction acide ;
v. de 0 à 5 parties de motifs monomères vinyliques ; et
vi. de 0 à 5 parties de motifs monomères (méth)acrylate multifonctionnel ;
sur la base de 100 parties en poids des monomères totaux du copolymère à faible Tg ayant une Tg inférieure à 20 °C.

6. Ensemble adhésif sensible à la pression multicouche selon l'une quelconque des revendications précédentes, dans lequel les motifs monomères ester d'acide (méth)acrylique en C₁ à C₃₂, les motifs monomères ester d'acide (méth)acrylique en C₁ à C₂₄, ou même les motifs monomères ester d'acide (méth)acrylique en C₁ à C₁₈ du copolymère de (méth)acrylate à faible Tg ayant une Tg inférieure à 20 °C sont choisis dans le groupe constitué d'esters (méth)acryliques d'éthanol, de 1-propanol, de 2-propanol, de 1-butanol, de 2-butanol, de 1-pentanol, de 2-pentanol, de 3-pentanol, de 2-méthyl-1-butanol, de 3-méthyl-1-butanol, de 1-hexanol, de 2-hexanol, de 2-méthyl-1-pentanol, de 3-méthyl-1-pentanol, de 2-éthyl-1-butanol, de 3,5,5-triméthyl-1-hexanol, de 3-heptanol, de 1-octanol, de 2-octanol, d'alcool iso-octylique, de 2-éthyl-1-hexanol, de 1-décanol, de 2-propylheptanol, de 1-dodécanol, de 1-tridécanol, de 1-tétradécanol, de citronellol, de dihydrocitronellol, et de n'importe quelles combinaisons ou n'importe quels mélanges de ceux-ci ; plus préférablement dans le groupe constitué d'esters (méth)acryliques de 2-octanol, de citronellol, de dihydrocitronellol, et de n'importe quelles combinaisons ou n'importe quels mélanges de ceux-ci.

7. Ensemble adhésif sensible à la pression multicouche selon l'une quelconque des revendications précédentes, dans lequel le copolymère de (méth)acrylate à Tg élevée ayant une Tg supérieure à 50 °C comprend :
i. jusqu'à 100 parties en poids de motifs monomères ester d'acide (méth)acrylique à Tg élevée ayant une Tg supérieure à 50 °C ;
ii. de 0 à 15, ou même de 1 à 5 parties en poids de motifs monomères à insaturation éthylénique à fonction acide ;
iii. de 0 à 50, ou même de 1 à 25 parties en poids de motifs monomères ester d'acide (méth)acrylique à faible Tg facultatifs ;
iv. de 0 à 10, ou même de 1 à 5 parties en poids d'autres motifs monomères polaires à insaturation éthylénique sans fonction acide facultatifs ; et
v. de 0 à 5, ou même de 1 à 5 parties en poids de motifs monomères vinyliques facultatifs ;
sur la base de 100 parties en poids des monomères totaux du copolymère de (méth)acrylate à Tg élevée ayant une Tg supérieure à 50 °C.

8. Ensemble adhésif sensible à la pression multicouche selon l'une quelconque des revendications précédentes, dans lequel les motifs monomères ester d'acide (méth)acrylique à Tg élevée ayant une Tg supérieure à 50 °C sont choisis dans le groupe constitué de (méth)acrylate de t-butyle, (méth)acrylate de méthyle, (méth)acrylate d'éthyle, (méth)acrylate d'isopropyle, (méth)acrylate de n-butyle, (méth)acrylate d'isobutyle, (méth)acrylate de s-butyle, (méth)acrylate de t-butyle, (méth)acrylate de stéaryle, (méth)acrylate de phényle, (méth)acrylate de cyclohexyle, (méth)acrylate d'isobornyle, (méth)acrylate de benzyle, (méth)acrylate de 3,3,5 triméthylcyclohexyle, (méth)acrylate de cyclohexyle, N-octyl-acrylamid, (méth)acrylate de propyle, et n'importe quels mélanges de ceux-ci.

9. Ensemble adhésif sensible à la pression multicouche selon l'une quelconque des revendications précédentes, dans lequel les motifs monomères ester d'acide (méth)acrylique à faible Tg ayant une Tg inférieure à 20 °C sont choisis dans le groupe constitué d'acrylate de n-butyle, acrylate d'isobutyle, acrylate d'hexyle, acrylate de 2-éthyl-hexyle, acrylate d'iso-octyle, acrylate de caprolactone, acrylate d'isodécyle, acrylate de tridécyle, méthacrylate de lauryle, monométhacrylate de méthoxy-polyéthylèneglycol, acrylate de lauryle, acrylate de tétrahydrofurfuryle, acrylate d'éthoxy-éthoxyéthyle, acrylate de nonyle éthoxylé et n'importe quels mélanges de ceux-ci.

10. Ensemble adhésif sensible à la pression multicouche selon l'une quelconque des revendications précédentes, dans lequel :
a) le premier copolymère de (méth)acrylate comprend de 0,1 à 11 % en poids, de 0,1 à 10 % en poids, de 0,2 à 10 % en poids, de 0,2 à 9 % en poids, de 0,2 à 8 % en poids, de 0,3 à 8 % en poids, de 0,5 à 8 % en poids, de 0,5 à 6 % en poids, de 1 à 6 % en poids, ou même de 1 à 5 % en poids, de motifs monomères acide (méth)acrylique, sur la base du poids du premier copolymère de (méth)acrylate ; et
b) le deuxième copolymère de (méth)acrylate comprend de 16 à 40 % en poids, de 16 à 35 % en poids, de 16 à 30 % en poids, de 16 à 25 % en poids, de 17 à 25 % en poids, de 17 à 23 % en poids, ou même de 17 à 20 % en poids de motifs monomères acide (méth)acrylique, sur la base du poids du deuxième copolymère de (méth)acrylate.

11. Procédé d'adhésion d'une première partie à une deuxième partie, dans lequel la première partie et la deuxième partie comprennent un polymère organique thermoplastique ou un thermodurcissable, et dans lequel le procédé comprend les étapes consistant à :
a) fournir un ensemble adhésif sensible à la pression multicouche tel que décrit dans l'une quelconque des revendications 1 à 10, et comprenant :
i. une deuxième couche de mousse polymère d'adhésif sensible à la pression comprenant deux surfaces principales ;
ii. une première couche polymère d'adhésif sensible à la pression adjacente à une surface principale de la couche de mousse polymère ;
iii. facultativement, une troisième couche d'adhésif sensible à la pression adjacente à la deuxième couche de mousse polymère d'adhésif sensible à la pression sur la surface principale qui est opposée à la surface principale ou à la deuxième couche de mousse polymère d'adhésif sensible à la pression adjacente à la première couche polymère d'adhésif sensible à la pression, et dans lequel la première couche polymère d'adhésif sensible à la pression, la deuxième couche de mousse polymère d'adhésif sensible à la pression et la troisième couche d'adhésif sensible à la pression facultative sont superposées ;
b) faire adhérer la première couche polymère d'adhésif sensible à la pression à la première partie ; et
c) faire adhérer la deuxième partie à la deuxième couche de mousse polymère d'adhésif sensible à la pression ou à la troisième couche d'adhésif sensible à la pression facultative.

12. Procédé selon la revendication 11, dans lequel la première partie et la deuxième partie sont utilisées pour des applications d'extérieur automobile, et sont indépendamment choisies dans le groupe constitué de, revêtement, habillages extérieurs, habillages de montant, insignes, ensembles rétroviseurs, becquets, lèvres de becquet avant, moulures de poignée pour couvercles de coffre, extensions de capot, passages de roue, moulures et incrustations côté carrosserie, ensembles de feu arrière, supports de sonar, supports de plaque d'immatriculation, ailes, modules d'aile, calandres avant, supports de nettoyage de phare, antennes, moulures de gouttière de toit, barres de toit, cadres de toit ouvrant, moulures de pare-brise avant, moulures de pare-brise arrière, pare-vent latéraux, pièces de carrosserie automobile, en particulier porte, toit, capot, couvercle de coffre, pare-choc, panneaux latéraux et n'importe quelles combinaisons de ceux-ci.

13. Procédé selon la revendication 11 ou 12, dans lequel le polymère organique thermoplastique ou thermodurcissable est choisi dans le groupe constitué de polyoléfines ; en particulier polypropylène (PP), polyéthylène (PE), polyéthylène à haute densité (HDPE) ; mélanges de polypropylène, en particulier polypropylène/ caoutchouc diénique éthylène-propylène (EPDM), polyoléfines thermoplastiques (TPO) ; élastomères thermoplastiques (TPE) ; polyamides (PA), en particulier polyamide 6 (PA6) ; acrylonitrile butadiène styrène (ABS) ; polycarbonates (PC) ; mélanges PC/ABS ; poly(chlorures de vinyle) (PVC) ; polyuréthanes (PU) ; polyacétals, en particulier polyoxyméthylène (POM) ; polystyrènes (PS) ; polyacrylates, en particulier poly(méthacrylate de méthyle) (PMMA) ; polyesters, en particulier téréphtalate de polyéthylène (PET) ; surfaces de revêtement transparent, en particulier des revêtements transparents pour des véhicules comme une voiture ou des surfaces revêtues pour des applications industrielles ; et n'importe quelles combinaisons ou n'importe quels mélanges de ceux-ci.

14. Utilisation d'un ensemble adhésif sensible à la pression multicouche selon l'une quelconque des revendications 1 à 10 pour faire adhérer une première partie à une deuxième partie, dans laquelle la première partie et la deuxième partie comprennent un polymère organique thermoplastique ou un thermodurcissable.

15. Utilisation d'un ensemble adhésif sensible à la pression multicouche selon l'une quelconque des revendications 1 à 10 pour la liaison à un substrat à faible énergie de surface ou à un substrat à énergie de surface moyenne.
